# EUROPÄISCHE PATENTSCHRIFT

(11) **EP 0 539 675 B1**
(45) Veröffentlichungstag und Bekanntmachung des Hinweises auf die Patenterteilung: **28.06.1995**
(21) Anmeldenummer: 92113933.3
(22) Anmeldetag: 14.08.1992
(51) Int. Cl.: B62D 53/12, B60D 1/62

(54) **Schleppzug, insbesondere Sattelzug, Stichwort: Multikupplung für Sattelauflieger**
Trailer train, especially tractor semi-trailer combination, keyword: multiple coupling for semi-trailer
Convoi routier, notamment combinaison camion semi-remorque, mot clef: attelage multiple pour semi-remorque

(30) Priorität: 30.10.1991 DE 4135795
(43) Veröffentlichungstag der Anmeldung: 05.05.1993
(73) Patentinhaber: ROCKINGER Spezialfabrik für Anhängerkupplungen GmbH & Co., D-80904 München (DE)
(72) Erfinder: Wohlhüter, Gerhard, Dipl.-Ing., W-8000 München 50 (DE)
(74) Vertreter: Weickmann, Heinrich, Dipl.-Ing.

(56) Entgegenhaltungen:
- GB-A- 2 204 844
- US-A- 3 391 950
- US-A- 3 628 811

## Beschreibung

Die Erfindung betrifft einen Schleppzug, insbesondere einen Sattelzug, umfassend ein straßengängiges Zugfahrzeug mit einer Längsachse, einer Querachse und einer Hochachse (im folgenden genannt: zugseitige Längsachse, zugseitige Querachse, zugseitige Hochachse),
ein straßengängiges Nachlauffahrzeug mit einer Längsachse, einer Querachse und einer Hochachse (im folgenden genannt: nachlaufseitige Längsachse, nachlaufseitige Querachse, nachlaufseitige Hochachse),
eine Schleppkupplung, insbesondere eine Sattelkupplung, zur Herstellung einer um eine hochachsenparallele Kupplungsachse gelenkigen Zug- und Schubverbindung zwischen den beiden Teilfahrzeugen: Zugfahrzeug und Nachlauffahrzeug,
eine Versorgungskupplung zwischen den beiden Teilfahrzeugen mit einer zugfahrzeugseitigen Kupplungshälfte (im folgenden genannt: zugseitige Kupplungshälfte) und einer nachlauffahrzeugseitigen Kupplungshälfte (im folgenden genannt: nachlaufseitige Kupplungshälfte), wobei von diesen Kupplungshälften mindestens eine erste mit dem Versorgungsteil des jeweiligen Teilfahrzeugs durch eine flexible Versorgungsleitung verbunden und im Zustand der Einkupplung mit der jeweils zweiten Kupplungshälfte relativ zum jeweiligen Teilfahrzeug in solcher Weise beweglich ist, daß relative Schwenkbewegungen der Teilfahrzeuge um die Kupplungsachse nicht wesentlich behindert sind.

Unter Versorgungskupplung wird eine Kupplung zwischen zwei Leitungsabschnitten einer Leitung verstanden, die dazu bestimmt und geeignet ist, dem Nachlauffahrzeug von einer auf dem Zugfahrzeug angeordneten Versorgungseinrichtung her elektrischen Strom oder/und Steuerbefehle oder/und Fluidenströme für die verschiedensten Funktionen, z.B. Beleuchtungsfunktionen, Bremsfunktionen, Kipperbetätigung und dergl. zuzuführen. Dabei ist es grundsätzlich denkbar, für die verschiedenen Zuführungen eine Mehrzahl von Versorgungsleitungen und eine entsprechende Anzahl von Versorgungskupplungen vorzusehen. Bevorzugt wird man aber, um der vereinfachten Handhabung Willen, möglichst viele Versorgungsleitungen in einem einzigen Kabel- oder Schlauchstrang zusammenlegen, um durch Kupplung einer einzigen oder einiger weniger Versorgungskupplungen alle notwendigen Versorgungsleitungen funktionstüchtig zu machen.

Bei bekannten Schleppzügen, insbesondere Sattelzügen, erfolgt das Kuppeln der Versorgungskupplung von Hand. Hierzu ist es notwendig, daß der Bedienungsmann vom Fahrerplatz aus sich in den Bereich der Stirnwand des Aufliegers begibt und dort die beiden Kupplungshälften miteinander verbindet.

Der Erfindung liegt die Aufgabe zugrunde, eine Versorgungskupplung an einem der im Oberbegriff des Anspruchs 1 definierten allgemein bekannten Sattelzug so auszubilden und anzuordnen, daß die beiden Kupplungshälften zwangsläufig in Eingriff treten, wenn das Zugfahrzeug durch die Sattelkupplung mit dem Nachlauffahrzeug in Zug- und Schubverbindung gebracht wird.

Zur Lösung dieser Aufgabe wird erfindungsgemäß vorgeschlagen,
daß eine der beiden Kupplungshälften am zugehörigen einen der beiden Teilfahrzeuge betriebsmäßig fest angeordnet ist,
daß die andere Kupplungshälfte über eine flexible Versorgungsleitung mit dem Versorgungsteil des anderen Teilfahrzeugs verbunden ist,
daß auf dem anderen Teilfahrzeug Positionierungsmittel vorgesehen sind, welche bei Trennung der Teilfahrzeuge die andere Kupplungshälfte in einer Fangbereitschaftsstellung positionieren, und
daß an dem einen Teilfahrzeug eine Fangvorrichtung für die andere Kupplungshälfte vorgesehen ist,
wobei die Fangvorrichtung bei einem Annäherungsvorgang zwischen den beiden Teilfahrzeugen die in Fangbereitschaftsstellung positionierte andere Kupplungshälfte in eine Fangstellung bezüglich des einen Teilfahrzeugs einfängt,
wobei weiter
entweder diese Fangstellung eine dem Zustand der Einkupplung zwischen den beiden Kupplungshälften entsprechende Kupplungsstellung ist
oder diese Fangstellung Ausgangspunkt eines am einen Teilfahrzeug angebrachten Transportwegs ist, auf welchem die andere Kupplungshälfte von der Fangstellung in eine dem Zustand der Einkupplung entsprechende Kupplungsstellung transportierbar ist,
und wobei die Positionierungsmittel im Einkupplungszustand der beiden Kupplungshälften der anderen Kupplungshälfte zumindest die für die relativen Schwenkbewegungen der beiden Teilfahrzeuge notwendige Bewegungsfreiheit gegenüber dem anderen Teilfahrzeug gewähren.

Die zwangsläufige Verbindung der beiden Kupplungshälften der Versorgungskupplung ist bereits dann von erheblichem Vorteil, wenn die Herstellung der Zug- und Schubverbindung zwischen Zugfahrzeug und Nachlauffahrzeug in herkömmlicher Weise durch einen am Ort der Sattelkupplung anwesenden Beobachter überprüft und unterstützt wird. Besondere Bedeutung kommt der zwangsläufigen Verbindung der Versorgungskupplungshälften dann zu, wenn es durch Einsatz entsprechender Fernbeobachtungsmittel und Fernbetätigungsmittel gelingt, die Zug- und Schubverbindung zwischen den beiden Teilfahrzeugen, also zwischen Zugfahrzeug und Nachlauffahrzeug vom Fahrerplatz aus durchzuführen. Der Fahrer kann dann in der Führerkabine sitzenbleiben und alle im Zusammenhang mit der Komplettierung des Sattelzugs notwendigen Maßnahmen von dort aus durchführen.

Nach einer bevorzugten Ausführungsform der Erfindung ist vorgesehen, daß die nachlaufseitige Kupplungshälfte am Nachlauffahrzeug betriebsmäßig fest angeordnet ist,
daß die zugseitige Kupplungshälfte über eine flexible Versorgungsleitung mit dem Versorgungsteil des Zugfahrzeugs verbunden ist,
daß auf dem Zugfahrzeug Positionierungsmittel vorgesehen sind, welche bei Trennung von Zugfahrzeug und Nachlauffahrzeug die zugseitige Kupplungshälfte in einer Fangbereitschaftsstellung positionieren, und
daß an dem Nachlauffahrzeug eine Fangvorrichtung für die zugseitige Kupplungshälfte vorgesehen ist,
wobei die Fangvorrichtung bei einem Annäherungsvorgang zwischen den beiden Teilfahrzeugen die in Fangbereitschaftsstellung positionierte zugseitige Kupplungshälfte in eine Fangstellung bezüglich des Nachlauffahrzeugs einfängt,
wobei weiter
entweder diese Fangstellung dem Zustand der Einkupplung zwischen den beiden Kupplungshälften entspricht
oder diese Fangstellung Ausgangspunkt eines am Nachlauffahrzeug angebrachten Transportwegs ist, auf welchem die zugseitige Kupplungshälfte von der Fangstellung in eine dem Zustand der Einkupplung zwischen den beiden Kupplungshälften entsprechende Kupplungsstellung transportierbar ist,
und wobei die Positionierungsmittel im Kupplungszustand der beiden Kupplungshälften der zugseitigen Kupplungshälfte zumindest die für relative Schwenkbewegungen der beiden Teilfahrzeuge notwendige Bewegungsfreiheit gegenüber dem Zugfahrzeug gewähren.

Die vorstehend angegebene erste Alternativmöglichkeit, daß die Fangstellung dem Zustand der Einkupplung zwischen den beiden Kupplungshälften entspricht, läßt sich praktisch in der Weise realisieren, daß beim Zusammenfahren von Zugfahrzeug und Nachlauffahrzeug die beiden Kupplungshälften einander angenähert und im Zuge dieser Annäherung zwangsläufig miteinander verbunden werden. Diese auf den ersten Blick besonders einfache Möglichkeit ist aber mit der Schwierigkeit verbunden, daß sie eine exakte Einhaltung einer vorbestimmten Annäherungsrichtung von Zugfahrzeug und Nachlauffahrzeug erfordert, damit die Kupplungshälften zusammentreten und gekuppelt werden können. Aus diesem Grunde wird man häufig gezwungen sein, auf die andere Alternative auszuweichen, bei welcher die Fangstellung Ausgangspunkt eines am Nachlauffahrzeug angebrachten Transportwegs ist, auf welchem die zugseitige Kupplungshälfte von der Fangstellung in eine dem Zustand der Einkupplung zwischen den beiden Kupplungshälften entsprechende Kupplungsstellung transportierbar ist. Bei dieser Alternative entfällt die Notwendigkeit, eine bestimmte Annäherungsrichtung zwischen den beiden Teilfahrzeugen einzuhalten. Die Fangstellung kann nämlich längs der Transportbahn beliebig variieren, weil zur Herstellung des Einkupplungszustands ohnehin eine Bewegung der von der Fangvorrichtung eingefangenen Kupplungshälfte notwendig ist und die Länge des jeweils durchlaufenen Transportwegs beliebig sein kann.

Um auch das Trennen der beiden Kupplungshälften der Versorgungskupplung beim Abkuppeln des Zugfahrzeugs vom Nachlauffahrzeug zu ermöglichen, wird weiterhin vorgeschlagen, daß die Fangvorrichtung zur zwangsläufigen Freigabe der anderen Kupplungshälfte und die Positionierungsmittel zur zwangsläufigen Neupositionierung der anderen Kupplungshälfte in der Einfangbereitschaftsstellung im Verlauf eines Trennvorgangs zwischen den beiden Teilfahrzeugen ausgebildet sind.

Angewandt auf die Alternative des Bestehens eines Transportwegs zwischen der Kupplungsstellung und der Fangstellung der anderen Kupplungshälfte ist vorgesehen, daß diese andere Kupplungshälfte zur Vorbereitung der Trennung von der Einfangvorrichtung längs des Transportwegs in eine möglicherweise der Fangstellung entsprechende Abgabestellung zurückführbar ist, von der aus die Neupositionierung in der Einfangsbereitschaftsstellung möglich ist.

Daß die Abgabestellung dabei nicht notwendig mit der Fangstellung zusammenfällt, liegt daran, daß man mit der Möglichkeit unterschiedlicher gegenseitiger Orientierung von Zugfahrzeug und Nachlauffahrzeug bei einem Kupplungsvorgang und bei einem späteren Trennvorgang rechnen muß.

Es wird empfohlen, daß die jeweils andere Kupplungshälfte bei Annäherung und Trennung der beiden Teilfahrzeuge mit der Fangvorrichtung gegenüber dem anderen Teilfahrzeug in dessen Längsrichtung jeweils auf einem Teilweg mitbewegbar ist. Durch diese Maßnahme wird es insbesondere möglich, daß durch die Annäherung der beiden Teilfahrzeuge die jeweils andere Kupplungshälfte aus der Einfangsbereitschaftsstellung, in der ihre Bewegungsmöglichkeiten möglicherweise durch die Positionierungsmittel eingeschränkt sind, in eine Betriebsstellung gebracht wird, in der sie die relative Schwenkbewegung von Zugfahrzeug und Nachlauffahrzeug nicht mehr oder nicht wesentlich behindert. Andererseits kann die Rückkehr der anderen Kupplungshälfte aus der im Betrieb eingenommenen Relativstellung gegenüber dem zugehörigen Teilfahrzeug dazu benutzt wird, um diese andere Kupplungshälfte wieder in den Einwirkungsbereich der Positionierungsmittel zu bringen. Mit anderen Worten: Es ist möglich, daß die andere Kupplungshälfte bei ihrer Mitbewegung mit der Fangvorrichtung im Falle einer Annäherung der beiden Teilfahrzeuge aus der durch die Positionierungsmittel bestimmten Einfangsbereitschaftsstellung lösbar und bei ihrer Mitbewegung mit der Fangvorrichtung im Falle einer Trennung der beiden Teilfahrzeuge in die Einfangsbereitschaftsstellung zurückführbar ist.

Zwischen der Fangvorrichtung und der anderen Kupplungshälfte kann eine erste Schnappverbindung bestehen, welche bei Annäherung der beiden Teilfahrzeuge einrastet und bei Trennung der beiden Teilfahrzeuge ausrastet. Weiterhin kann zwischen den Positionierungsmitteln und der anderen Kupplungshälfte eine zweite Schnappverbindung bestehen, welche bei Annäherung der beiden Teilfahrzeuge ausrastet und bei Trennung der beiden Teilfahrzeuge einrastet.

Sind zwei solche Schnappverbindungen vorhanden, so ist darauf zu achten, daß die erste Schnappverbindung und die zweite Schnappverbindung derart aufeinander abgestellt sind, daß bei einer Annäherung der beiden Teilfahrzeuge die erste Schnappverbindung einrastet, bevor die zweite Schnappverbindung ausrastet und daß bei einer Trennung der beiden Teilfahrzeuge die zweite Schnappverbindung einrastet, bevor die erste Schnappverbindung ausrastet.

Die erste Schnappverbindung kann beispielsweise zwischen einer Fangschiene der Fangvorrichtung und einem die Fangschiene umgreifenden U-Teil der anderen Kupplungshälfte vorgesehen sein. Dies ist besonders vorteilhaft im Hinblick auf den im folgenden noch näher zu erörternden Transport der anderen Kupplungshälfte zwischen der Fangstellung und der Kupplungsstellung, weil dann die Fangschiene Basis des Transportwegs sein kann und die Schnappverbindung auf dem gesamten Transportweg längs der Fangschiene aufrecht erhalten werden kann.

Die Positionierungsmittel können z.B. von einer Positionierungsgabel an dem anderen Teilfahrzeug gebildet sein, wobei dann an der anderen Kupplungshälfte ein Gabeleingriffsglied vorgesehen sein kann, das bei Annäherung der Teilfahrzeuge aus der Gabel ausfährt und bei Trennung der Teilfahrzeuge in die Gabel einfährt. Ist bei einer solchen Gabellösung eine zweite Schnappverbindung beabsichtigt, so kann diese zwischen der Positionierungsgabel und dem Gabeleingriffsbolzen vorgesehen sein, etwa mit einem orthogonal zur Gabelebene ausladenden Keilprofil der Positionierungsgabel und einem an diesem Keilprofil gleitenden elastisch ausziehbaren Keileingriffskopf des Gabeleingriffsbolzens.

Wenn es sich im Hinblick auf beschränkte Raumverhältnisse oder/und im Hinblick auf einen Schutz des Gabeleingriffsbolzens gegen mechanische Beschädigung als notwendig erweist, so ist es möglich, daß der Gabeleingriffsbolzen bei Nichtgebrauch in eine raumsparende Ruhestellung zurückziehbar ist.

Für beide Schnappverbindungen gilt grundsätzlich, daß sie mit elastisch nachgiebigen Schnappnocken ausgeführt werden können, wobei die jeweilige Nockenform so gewählt werden kann, daß bei einer Annäherung der beiden Teilfahrzeuge die erste Schnappverbindung einrastet, bevor die zweite Schnappverbindung ausrastet und daß bei einer Trennung der beiden Teilfahrzeuge die zweite Schnappverbindung einrastet, bevor die erste Schnappverbindung ausrastet. Andererseits ist es aber auch möglich, daß mindestens eine der "Schnappverbindungen" elektrisch gesteuert ist.

Um unabhängig von der jeweiligen Annäherungsrichtung der Teilfahrzeuge das Einfangen der anderen Kupplungshälfte durch die Fangvorrichtung zu erleichtern, kann vorgesehen sein, daß die Fangvorrichtung oder/und die andere Kupplungshälfte mit Einweiseschrägflächen ausgeführt sind.

Um andererseits beim Trennen von Zugfahrzeug und Nachlauffahrzeug die Wiedereinführung der anderen Kupplungshälfte in Wirkverbindung mit den Positionierungsmitteln und damit in die Einfangbereitschaftsstellung zu erleichtern, kann vorgesehen sein, daß die Positionierungsmittel und/oder die andere Kupplungshälfte Einweiseschrägflächen aufweisen.

Grundsätzlich ist es möglich, die andere Kupplungshälfte in der Einfangsbereitschaftsstellung, in der sie ja von der Fangvorrichtung übernommen ist, mechanisch vollständig von dem zugehörigen Teilfahrzeug zu trennen. Dies führt dazu, daß jegliche Behinderung der Gelenkbewegung zwischen Zugfahrzeug und Nachlauffahrzeug bei der Fahrt ausgeschlossen ist. Zu einem vergleichbar guten Ergebnis kann man aber auch dann kommen, wenn die Positionierungsmittel ein Gestänge in Form einer Teleskopstange, einer Schere, eines Gelenkvierecks, eines abrollbaren Federbands oder dergl. umfaßt, welches die andere Kupplungshälfte trägt und in einer zu der zugseitigen Längsachse und der zugseitigen Querachse parallelen Ebene beweglich ist. Dieses Gestänge kann Dank seiner Beweglichkeit in der genannten Parallelebene auch während der Fahrt erhalten bleiben. Andererseits kann dieses Gestänge durch mindestens eine Gruppe von elastischen Vorspannmitteln in Richtung auf Annäherung der anderen Kupplungshälfte an der Einfangsbereitschaftsstellung vorgespannt sein. Auch wenn man die andere Kupplungshälfte nicht auf einem Gestänge mit Tragfunktion anbringt, so ist es im Hinblick auf eine problemlose Führung der anderen Kupplungshälfte zwischen Einfangsbereitschaftsstellung und Fangstellung denkbar, daß die andere Kupplungshälfte auf dem anderen Teilfahrzeug durch ein Führungslineal ohne Tragfunktion geführt ist, welches in einer zur Hochachse des anderen Teilfahrzeugs parallelen Ebene schwenkbar ist.

Um ein problemloses Einfangen der anderen Kupplungshälfte durch die Fangvorrichtung auch dann zu gewährleisten, wenn die beiden Teilfahrzeuge bei Annäherung mit ihren Längsachsen nicht zueinander ausgerichtet sind, wird empfohlen, daß die andere Kupplungshälfte in der Einfangsbereitschaftsstellung um eine zu der zugseitigen Hochachse parallele Einstellachse schwenkbar gelagert ist, möglicherweise unter Vorspannung in eine Ruhewinkelstellung.

Für die weiter oben angesprochene Alternative, bei der die andere Kupplungshälfte in einer von der Kupplungsstellung verschiedenen Fangstellung in der Fangvorrichtung aufgenommen wird und danach in die Kupplungsstellung längs des Transportwegs transportiert werden muß, ist vorgesehen, daß die andere Kupplungshälfte auf dem Transportweg motorisch bewegt wird. Dabei wird insbesondere daran gedacht, daß ein elektrischer oder fluidischer Antrieb für die Befahrung des Transportwegs an demjenigen der Teile: "andere Kupplungshälfte" und "eines Teilfahrzeugs" angeordnet ist, welches mit dem Antrieb des Sattelzugs auch bei Trennung der beiden Teilfahrzeuge verbunden bleibt. Grundsätzlich wäre es aber auch denkbar, die Bewegung der anderen Kupplungshälfte auf dem Transportweg unter Ausnutzung der Annäherungsbewegung der beiden Teilfahrzeuge als Energiequelle zu bewerkstelligen.

Eine besonders einfache Lösung liegt darin, daß die andere Kupplungshälfte mit einem Antriebsmotor und einem von diesem angetriebenen Ritzel ausgerüstet ist, welches bei Eintritt der anderen Kupplungshälfte in die Fangstellung mit einer den Transportweg definierenden Zahnstange in Eingriff tritt. Der Antriebsmotor kann dann durch eine Energieversorgungsleitung gespeist sein, welche in einem von der anderen Kupplungshälfte zu der Versorgungseinheit des Zugfahrzeugs ständig verlaufenden Mehrfachkabel oder -schlauch aufgenommen ist. Die Zahnstange kann beispielsweise von einem Zahnriemenabschnitt gebildet sein. Dieser Zahnriemenabschnitt kann auf der weiter oben schon angesprochenen Fangschiene verlegt sein. Ist dann die Kupplungshälfte - wie auch schon weiter oben erwähnt - mit einem die Fangschiene umgreifenden U-Teil ausgeführt, so kann dieses U-Teil eine exakte Führung entlang der Fangschiene unter Erhaltung des Eingriffs zwischen Ritzel und Zahnstange gewährleisten, wobei dieser Eingriff dadurch aufrecht erhalten werden kann, daß zwischen der Fangschiene und dem U-Teil eine Schnappverbindung besteht, welche auf dem ganzen Transportweg des U-Teils und damit der anderen Kupplungshälfte längs des Transportwegs bestehen bleibt.

Was nun die Richtung des Transportwegs zwischen Fangstellung und Kupplungsstellung anbelangt, so wird sie unter Berücksichtigung des Aufbaus der Teilfahrzeuge und der Sattelkupplung in der Regel in Richtung der Querachse des einen Teilfahrzeugs verlaufen. Dann besteht die Möglichkeit, die Versorgungskupplung als eine herkömmliche Steckkupplung auszubilden mit einer zu dem Transportweg parallelen Steckrichtung. Um ein störungsfreies Zusammenfinden der beiden Kupplungshälften zu gewährleisten, ohne bei der Gestaltung der Transportbahn und der die andere Kupplungshälfte auf der Transportbahn führenden Führungsmittel besondere Präzision einhalten zu müssen, empfiehlt es sich, die beiden Kupplungshälften mit Einweiseflächen, z.B. in Form eines Einweisedorns und eines komplementären Einweiselochs, auszuführen.

Die Steuerung des motorischen Antriebs für die Bewegung in Richtung auf den Zustand der Einkupplung ist problemlos. Die Annäherungsbewegung der anderen Kupplungshälfte an die eine Kupplungshälfte kann entweder durch Endschalter ausgelöst werden, wenn die andere Kupplungshälfte von der Fangvorrichtung eingefangen ist, sie kann aber auch von dem in der Führerkabine sitzenden Bedienungsmann von Hand ausgelöst werden, was allerdings weniger vorteilhaft ist, weil es die Möglichkeit des Vergessens dieser wichtigen Maßnahme nicht ausschließt. Zum Stillstand kommt die andere Kupplungshälfte zwangsläufig dann, wenn sie auf die eine Kupplungshälfte den Kupplungszustand herstellend auffährt. Der Motor kann dann wiederum durch einen Endschalter ausgeschaltet werden oder so gestaltet sein, daß er im Stillstand dauerbelastbar ist. Schwieriger ist die Rückfahrt der Antriebskupplung im Verlauf einer Trennoperation zwischen den beiden Teilfahrzeugen. Diese Rückfahrt muß zu einer Abgabestellung im Bereich des Transportwegs führen, von der aus die andere Kupplungshälfte problemlos wieder in die Einfangsbereitschaftsstellung am anderen Teilfahrzeug übergehen kann. Man könnte daran denken, die Abgabestellung jeweils an die vom vorangehenden Zusammenkuppeln der Teilfahrzeuge her bekannte Fangstellung anzugleichen. Dann ist aber der Tatsache nicht Rechnung getragen, daß sich die Relativorientierung der Längsachsen beider Teilfahrzeuge bei diesem Trennvorgang durchaus anders darstellen kann als die Relativorientierung beim vorangegangenen Annäherungsvorgang war. Man kann diesen Fehler möglicherweise durch entsprechende Einweiseflächen kompensieren. Man kann aber auch daran denken, die Abgabestellung, in die die andere Kupplungshälfte im Verlauf eines Trennvorgangs einfahren soll, durch ein Lageerkennungssystem zu bestimmen. Das Lageerkennungssystem kann insbesondere ein optisches Lageerkennungssystem sein, etwa mit Hilfe von Laserstrahlsendern, Laserstrahlreflektoren und Laserstrahlempfängern. Grundsätzlich ist es auch denkbar, die Winkeleinstellung zwischen den Längsachsen der beiden Teilfahrzeuge durch ein Winkelmeßgerät zu ermitteln und über eine Recheneinheit daraus die notwendige Abgabestellung für die andere Kupplungshälfte zu errechnen.

Die richtige Höheneinstellung der beiden Kupplungshälften zueinander ist in der Regel deshalb unproblematisch, weil die relative Höhenlage der beiden Teilfahrzeuge im Bereich der Sattelkupplung und damit auch im Bereich der Versorgungskupplung durch Eingriff zwischen einer Sattelplatte des Zugfahrzeugs und einer Auflageplatte des Nachlauffahrzeugs sichergestellt ist oder sichergestellt werden kann. Trotzdem soll nicht ausgeschlossen sein, daß die Fangvorrichtung oder/und die andere Kupplungshälfte einer Niveaukorrekturbewegung in Richtung der Hochachse des jeweils zugehörigen Teilfahrzeugs fähig sind, wobei diese Niveaukorrekturbewegung durch eine Niveaudifferenzerkennungsvorrichtung steuerbar ist.

Es wurde eingangs bereits angedeutet, daß die Vorteile der erfindungsgemäßen Ausgestaltung einer Versorgungskupplung dann besonders groß sind, wenn der Fahrer des Zugfahrzeugs die Möglichkeit hat, den mechanischen Kupplungsvorgang zwischen den beiden Teilfahrzeugen von der Führerkabine aus durch Rangieren des Zugfahrzeugs zu bewerkstelligen, auch wenn eine Hilfsperson zur Überwachung und Unterstützung dieses Kupplungsvorgangs am Ort der Sattelkupplung nicht zur Verfügung steht. Es wird deshalb weiter vorgeschlagen, daß zur Herbeiführung der kupplungsgerechten Ausrichtung von zugfahrzeugseitigen und nachlauffahrzeugseitigen Kupplungsteilen der Sattelkupplung beim Kupplungsvorgang und zur Bedienung der Sattelkupplungsfunktionen ein Fernerkennungssystem oder/und Fernbetätigungssystem im Führerstand vorgesehen ist.

Das Fernbetätigungssystem kann mit elektrischen oder fluidischen Servogeräten ausgeführt sein. Das Fernerkennungssystem kann mit einer Glasfaseroptik oder einem Fernsehkamera-/ Fernsehempfängersystem ausgeführt sein, so daß der Bedienungsmann von seinem Platz in der Führerkabine aus auf dem Bildschirm die Relativlage zusammengehörender Kupplungsteile der Sattelkupplung erkennen und ggf. korrigieren kann.

Um die Niveauanpassung der Teilfahrzeuge bis zum Anliegen der Sattelplatte des Zugfahrzeugs einerseits und der Auflageplatte des Nachlauffahrzeug andererseits herbeizuführen, kann das Zugfahrzeug mit einer Höheneinstellvorrichtung zur Höheneinstellung der ihm zugehörigen Teile der Sattelkupplung ausgerüstet sein. So kann z.B. zwischen den Hinterrädern des Zugfahrzeugs und dem die Sattelkupplung tragenden Rahmenteil eine aktive Luftfederung vorgesehen sein, die durch Luftzuführung oder durch Luftabfuhr zu einer Korrektur der Höhenlage der Sattelplatte veranlaßt werden kann, bevorzugt wiederum vom Fahrerplatz aus. Zusätzlich oder alternativ kann auch das Nachlauffahrzeug mit höhenveränderlichen Stützbeinen ausgerüstet sein, die mittels einer Fernsteuerung vom Fahrerplatz aus motorisch verlängert oder verkürzt werden können, mit der Folge einer entsprechenden Höhenveränderung der Auflageplatte des Nachlauffahrzeugs.

Selbstverständlich sollte die Möglichkeit vorgesehen werden, die vom Bedienungsmann zu beeinflussenden Vorgänge beim Kuppeln und Trennen der Versorgungskupplung vom Fahrerplatz aus zu beeinflussen, insoweit, als nicht die Möglichkeit besteht, diese Vorgänge überhaupt selbsttätig, etwa durch Endschalter, zu beeinflussen, die beim Annähern und Trennen der Teilfahrzeuge betätigt werden. Zumindest für eine Periode des Ersteinsatzes der erfindungsgemäßen Lösung dürfte es vorteilhaft sein, wenn die Kupplungshälften derart ausgebildet und angeordnet sind, daß sie auch von Hand in den Zustand der gegenseitigen Einkupplung gebracht werden können. Dies bedeutet, daß man eine Möglichkeit vorsehen sollte, die andere Kupplungshälfte aus ihrer Einfangsbereitschaftsstellung bzw. aus ihrer Verbindung mit der Fangvorrichtung, der Transportbahn und der einen Kupplungshälfte zu lösen, um die Kupplungshälften nach Wunsch von Hand kuppeln oder trennen zu können.

Alternativ hierzu ist auch eine Redundanzlösung denkbar, derart, daß neben einer selbsttätigen bzw. fernbedienbaren Versorgungskupplung eine herkömmliche von Hand zu öffnende bzw. zu schließende Versorgungskupplung vorgesehen ist.

Die Positionierungsmittel für die Positionierung der anderen Kupplungshälfte in Einfangsbereitschaftsstellung können grundsätzlich an dem zugehörigen Teilfahrzeug in beliebiger Weise angebracht werden, beispielsweise auf dem die Sattelplatte der Sattelkupplung tragenden Rahmen des Zugfahrzeugs.

Um die gegenseitige Justierung gegenüber der Sattelkupplung zu vereinfachen, ist es vorteilhaft, wenn die Positionierungsmittel für die Positionierung der anderen Kupplungshälfte in Einfangsbereitschaftsstellung an einem Kupplungsteil der Sattelkupplung, insbesondere an einer Sattelplatte des Zugfahrzeugs, angebracht sind.

Im Hinblick darauf, daß die ordnungsgemäße Erhaltung des Einkupplungszustands zwischen den beiden Kupplungshälften der Versorgungskupplung für die Fahrsicherheit von größter Bedeutung ist, kann es vorteilhaft sein, wenn der einmal erreichte Zustand der Einkupplung noch zusätzlich gesichert und überwacht wird. Die zusätzliche Sicherung kann durch ein elektrisch gesteuertes Verriegelungssystem erfolgen, das der Bedienungsmann von seinem Standplatz in der Führerkabine aus betätigen und überwachen kann, beispielsweise ist es denkbar, daß in der Kabine während des Kupplungsvorgangs der beiden Teilfahrzeuge ein optischer oder akustischer Signalgeber ein Warnsignal liefert solange, bis die Versorgungskupplung ordnungsgemäß gekuppelt und gesichert ist.

Ein wesentlicher Gesichtspunkt der Erfindung ist folgender: Bei einem Sattelzug steht üblicherweise die Möglichkeit einer Höhenausrichtung von Zugfahrzeug und Nachlauffahrzeug dadurch zur Verfügung, daß im Zuge der Annäherung von Zugfahrzeug und Nachlauffahrzeug zum Zwecke der Herbeiführung eines gekuppelten Zustands das Nachlauffahrzeug mit seiner Aufliegerplatte auf der Sattelplatte des Zugfahrzeugs zu liegen kommt, sei es, daß das Nachlauffahrzeug durch Einziehen der Stützbeine auf die Sattelplatte abgesenkt wird oder sei es, daß das Zugfahrzeug nach Übereinanderfahren der beiden Platten etwa durch seine eigene Luftfederung zur Anlage an der Unterseite der Aufliegerplatte gebracht wird. Diese höhenmäßige Ausrichtung kann zum Zusammenführen der Versorgungskupplungshälften herangezogen werden und erleichtert dieses Zusammenführen. Es kann nämlich die eine der beiden Kupplungshälften höhenfest am zugehörigen Teilfahrzeug angebracht werden und die andere der beiden Kupplungshälften kann an dem zugehörigen Teilfahrzeug bereits in derjenigen Höhenlage in Einfangbereitschaftsstellung gehalten werden, die der Höhenstellung der einen Kupplungshälfte dann entspricht, wenn Sattelplatte und Aufliegerplatte aufeinanderliegen. Damit bedarf es keiner Ausgleichsbewegung in der Höhenrichtung mehr. Zur Annäherung der beiden Kupplungshälften in Längsrichtung kann die Annäherung der Teilfahrzeuge herangezogen werden, die bei fluchtender Annäherung strikt in Richtung der Längsachse erfolgt, aber auch bei nichtfluchtender Annäherung der beiden Teilfahrzeuge eine wesentliche Bewegungskomponente in Längsrichtung umfaßt. Es bedarf also nur noch eines horizontalen Transportwegs, der zusätzlich unabhängig von den Relativbewegungen der Teilfahrzeuge durchfahren werden muß, um den Kupplungszustand zwischen den beiden Kupplungshälften herzustellen. Zusätzlich bedarf es für den Fall der nichtfluchtenden Annäherung in der Regel einer Drehbarkeit der anderen Kupplungshälfte in ihrer Einfangbereitschaftsstellung, so daß sich diese andere Kupplungshälfte beim Zusammentreffen mit dem anderen Teilfahrzeug um die jeweilige Hochachse an die Querrichtung des anderen Teilfahrzeugs, d.h. in Parallelstellung zu dieser, anpassen kann.

Die beiliegenden Figuren erläutern die Erfindung anhand von Ausführungsbeispielen; es stellen dar:
- Figur 1: eine Draufsicht auf einen Sattelzug, dessen Zugfahrzeug und Nachlauffahrzeug mit den jeweiligen Längsrichtungen aufeinander ausgerichtet sind und durch Annähern der beiden Teilfahrzeuge miteinander gekuppelt werden können;
- Figur 2: eine Seitenansicht zur Figur 1, wobei jedoch die beiden Teilfahrzeuge im Vergleich zur Figur 1 schon soweit angenähert sind, daß die Auflageplatte des Nachlauffahrzeugs auf der Sattelplatte des Zugfahrzeugs ruht;
- Figur 3: eine Ansicht entsprechend Figur 1, wobei jedoch Zugfahrzeug und Nachlauffahrzeug soweit angenähert sind, daß die zugseitige Kupplungshälfte aus der Einfangsbereitschaftsstellung gegenüber den zugehörigen Positionierungsmitteln ausgetreten ist und von der Fangvorrichtung des Nachlauffahrzeugs in einer Fangstellung gehalten wird;
- Figur 4: eine Seitenansicht zur Figur 3;
- Figur 5: eine Ansicht entsprechend Figur 3, wobei jedoch die zugseitige Kupplungshälfte aus der Fangstellung in eine Kupplungsstellung gebracht worden ist und die beiden Kupplungshälften miteinander gekuppelt sind;
- Figur 5a: eine Ansicht entsprechend Figur 5, wobei jedoch zur Führung der zugseitigen Kupplungshälfte ein Führungslineal vorgesehen ist;
- Figur 6: eine Ansicht entsprechend Figur 3, wobei die Positionierungsmittel jedoch anders gestaltet sind als in Figur 3;
- Figur 7: eine Seitenansicht zur Figur 6;
- Figur 8: eine Draufsicht auf eine weitere Ausführungsform der Erfindung, wobei Zugfahrzeug und Nachlauffahrzeug mit ihren Längsachsen zueinander ausgerichtet sind, jedoch nicht miteinander gekuppelt sind und wobei die zugseitige Kupplungshälfte noch in Einfangsbereitschaftsstellung an dem Zugfahrzeug gehalten ist;
- Figur 9: eine Seitenansicht zur Figur 8;
- Figur 10: eine Draufsicht entsprechend derjenigen der Figur 8, wobei jedoch die zugseitige Kupplungshälfte bereits von der Fangvorrichtung des Nachlauffahrzeugs eingefangen ist und die Teile der Sattelkupplung, nämlich Kupplungsplatte und Königszapfen, in zug- und schubübertragendem Eingriff sind;
- Figur 11: eine Seitenansicht zur Figur 10 und
- Figur 12: eine Draufsicht entsprechend Figur 10, wobei die zugseitige Kupplungshälfte der Versorgungskupplung in die nachlaufseitige Kupplungshälfte eingekuppelt ist.

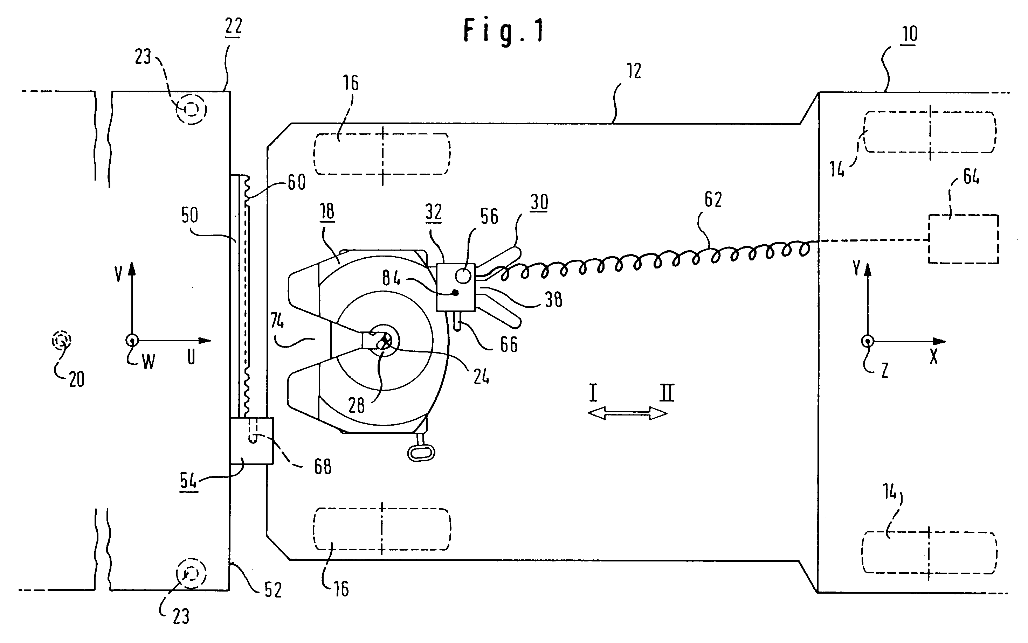

In Figur 1 ist das Zugfahrzeug, das heißt der Sattelschlepper eines Sattelzugs, ganz allgemein mit 10 bezeichnet. Dieses Zugfahrzeug läuft in herkömmlicher Weise auf lenkbaren Vorderrädern 14 und mindestens einem Hinterradpaar 16, welches einen Rahmen 12 unterstützt. Der Rahmen 12 kann durch eine aktive Luftfederung gegenüber dem Hinterradpaar 16 heb- und senkbar sein. Auf dem Rahmen 12 ist eine Sattelkupplungsplatte 18 herkömmlicher Bauart angebracht. Die Sattelkupplungsplatte 18 bildet zusammen mit einem Königszapfen 20 eines Nachlauffahrzeugs 22 eine Sattelkupplung. Das Nachlauffahrzeug 22 ist an seinem in normaler Fahrtrichtung rückwärtigen Ende von mindestens zwei gleichachsigen nicht lenkbaren Rädern getragen und im Bereich seines vorderen Endes mit Stützbeinen 23 ausgerüstet, welche das vordere, das heißt in Figur 1 rechte, Ende des Nachlauffahrzeugs auf der jeweiligen Fahrfläche dann abstützen, wenn das Nachlauffahrzeug nicht mit dem Zugfahrzeug verbunden ist. Zur Erleichterung der Beschreibung ist dem Zugfahrzeug 10 ein Koordinatensystem XYZ zugeordnet mit einer zugfahrzeugseitigen Längsachse X (im folgenden verkürzt genannt: zugseitige Längsachse X), einer zugfahrzeugseitigen Querachse Y (im folgenden genannt: zugseitige Querachse Y) und einer zugfahrzeugseitigen Hochachse Z (im folgenden genannt: zugseitige Hochachse Z). Weiterhin ist auch dem Nachlauffahrzeug 22 ein Koordinatensystem UVW zugeordnet mit einer nachlauffahrzeugseitigen Längsachse U (im folgenden genannt: nachlaufseitige Längsachse U), einer nachlaufseitigen Querachse V und einer nachlaufseitigen Hochachse W.

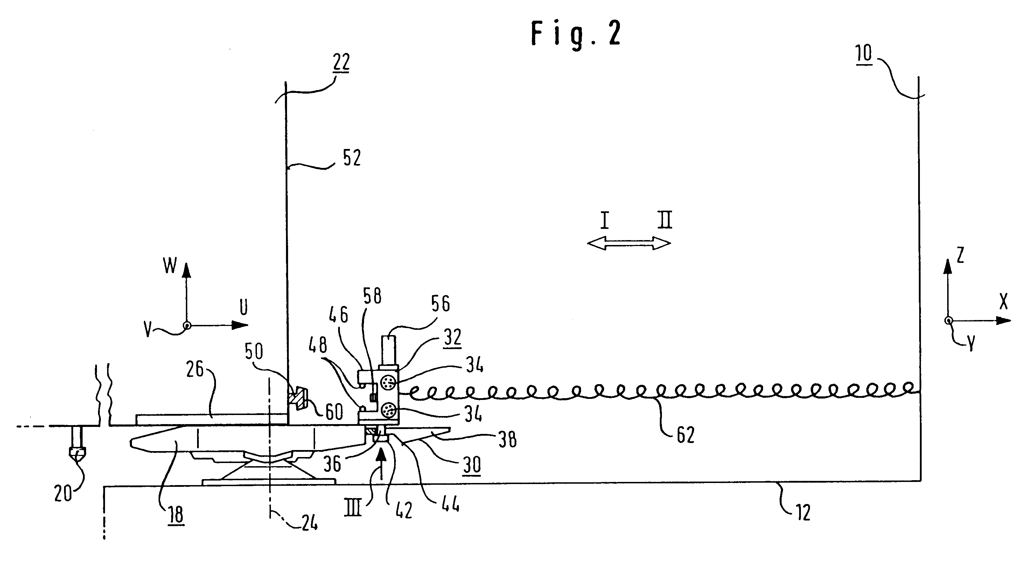

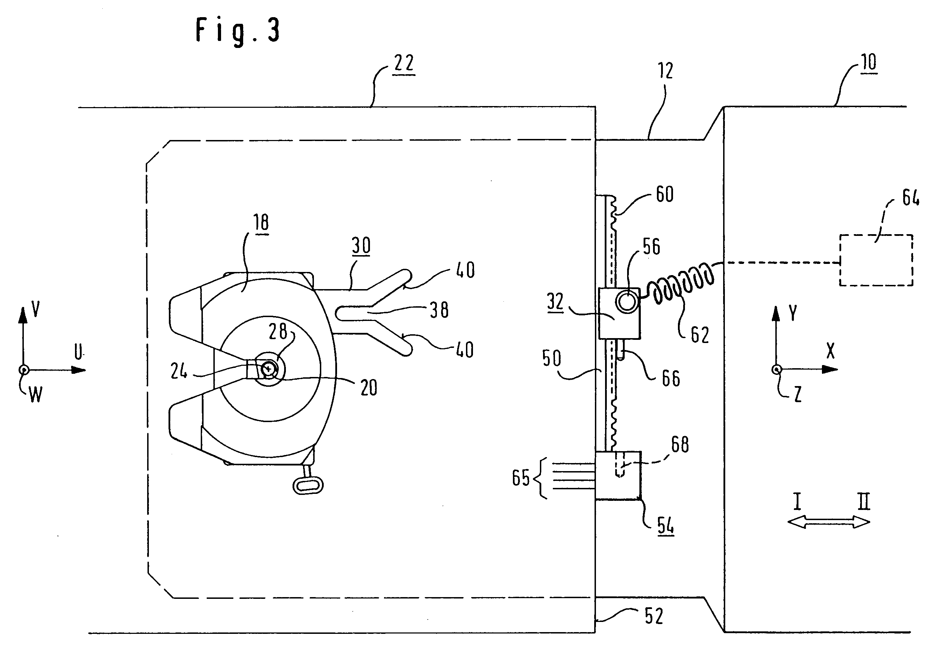

In Figur 1 sind die beiden Teilfahrzeuge 10 und 22 mit ihren Längsachsen X und U in Flucht eingestellt, so daß der Kupplungsvorgang durch ein Zurückstoßen des Zugfahrzeugs in Richtung I bewerkstelligt werden kann. Dabei gelangt dann - wie in Figur 2 dargestellt - die Auflageplatte 26 des Nachlauffahrzeugs 22 über die Sattelplatte 18 des Zugfahrzeugs 10 und schließlich tritt - wie in Figur 3 dargestellt - der Königszapfen 20 in das Schloß 28 der Sattelplatte 18 ein, wo er verriegelt wird, so daß Zug- und Schubkräfte zwischen den beiden Teilfahrzeugen 10 und 22 in beiden Pfeilrichtungen I und II der Figur 1 übertragen werden können. In diesem Zustand gemäß Figur 3 sind die beiden Teilfahrzeuge 10 und 22 um eine Gelenkachse 24 gelenkig miteinander verbunden, die parallel zu den Hochachsen Z und W ist.

An der Sattelplatte 18 ist - wie aus Figuren 1 bis 3 zu ersehen - eine Positionisierungskonsole 30 angebracht, auf welcher eine zugseitige Kupplungshälfte 32 positioniert ist. Die zugseitige Kupplungshälfte ist mit Kupplungssteckern 34 ausgeführt. Zur Positionierung der zugseitigen Kupplungshälfte 32 auf der Positionierungskonsole 30 dient ein Gabeleingriffsbolzen 36, der in einen Gabelschlitz 38 der Positionierungskonsole 30 von dem offenen Ende des Gabelschlitzes her unter Benutzung von Einführungsschrägen 40 eingeführt ist. Der Gabeleingriffsbolzen 36 ist durch nicht eingezeichnete Federvorspannmittel in Pfeilrichtung III nach oben vorgespannt, so daß er in den Körper der zugseitigen Kupplungshälfte 32 einfahren will. Beim Einschieben des Gabeleingriffsbolzens 36 in den Gabelschlitz 38 gleitet ein Kopfteil 42 des Gabeleingriffsbolzens 36 über ein Keilprofil 44 an der Unterseite der Positionierungskonsole 30 hinweg und verrastet dann in der in Figur 2 gezeichneten Stellung, die als Einfangsbereitschaftsstellung bezeichnet sei. Die Kupplungshälfte 32 ist mit einem U-Teil 46 ausgeführt, an welchem Schnappnocken 48 angebracht sind. Die Positionierungskonsole 30 kann einstückig mit der Sattelplatte 18 hergestellt sein.

An dem Nachlauffahrzeug ist zum Zusammenwirken mit dem U-Teil 46 eine Fangschiene 50 angebracht, die sich in Richtung der nachlaufseitigen Querachse V erstreckt und an der Vorderwand 52 des Nachlauffahrzeugs angebracht ist.

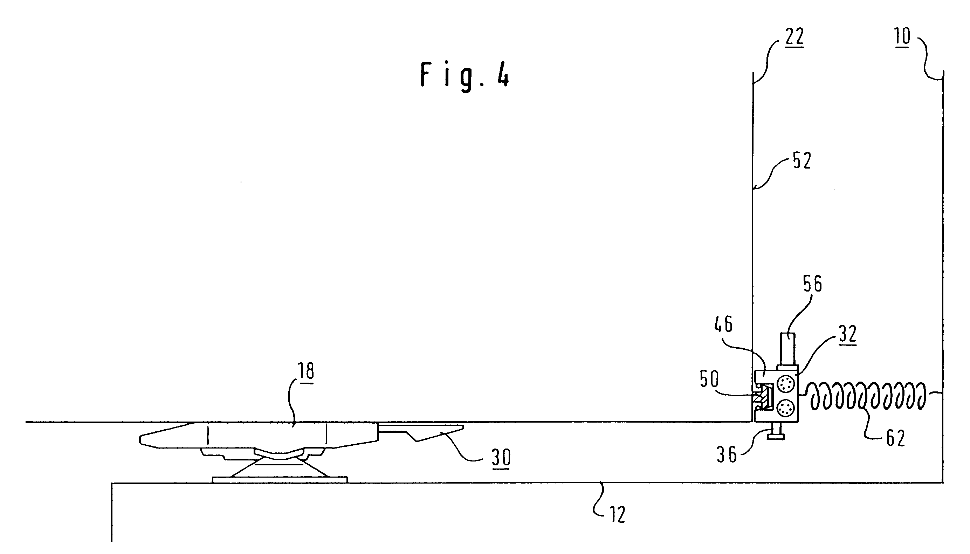

Wenn ausgehend von der Stellung gemäß Figur 1 über die Stellung gemäß Figur 2 die Stellung gemäß Figur 3 hergestellt wird, so trifft die Fangschiene 50 noch bevor der Königszapfen 20 in das Kupplungsschloß 28 gelangt, auf die Schnappnocken 48, rückt diese nach oben und unten elastisch aus und schnappt somit in das U-Teil 46 ein. Damit befindet sich die zugseitige Kupplungshälfte 32 in Fangstellung an der Fangschiene 50, welche auch als Fangvorrichtung bezeichnet wird. Wenn nun das Zugfahrzeug 10 ausgehend von der Stellung in Figur 2 weiter entgegen der die allgemeine Fahrtrichtung darstellenden Längsachse X rückwärts stößt, so nähert sich das Kupplungsschloß 28 dem Königszapfen an und dabei wird die zugseitige Kupplungshälfte 32 aus dem Gabelschlitz 38 herausgeschoben, wobei der Zugbolzenkopf 42 entgegen der auf ihn wirkenden Federkraft das Keilprofil 44 überwindet. Damit gelangt die zugseitige Kupplungshälfte 32 schließlich in die Position gemäß Figuren 3 und 4, in welcher die zugseitigen Kupplungshälften 32 von der Positionierungskonsole 30 vollständig getrennt ist und nur noch von der Fangschiene 50 in der Fangstellung getragen wird.

Wie aus Figur 3 zu ersehen, ist dann die zugseitige Kupplungshälfte 32 von der nachlaufseitigen Kupplungshälfte 54 noch beabstandet, und zwar in Richtung der nachlaufseitigen Querachse V. Um nun den Kupplungszustand zwischen den beiden Kupplungshälften 32 und 54 herzustellen, muß die zugseitige Kupplungshälfte 32 in Richtung der Querachse V längs der Fangschiene 50 an die nachlaufseitige Kupplungshälfte 54 angenähert werden. Hierzu ist in der zugseitigen Kupplungshälfte 32 ein Getriebemotor 56 vorgesehen, weicher ein Zahnstangen-Ritzel 58 trägt (siehe Figur 2). Dieses Zahnstangen-Ritzel 58 ist mit dem Eintritt der Fangschiene 50 in das U-Teil 46 in Eingriff mit einem Zahnriemenabschnitt 60 getreten, der auf der Fangschiene 50 verlegt ist.

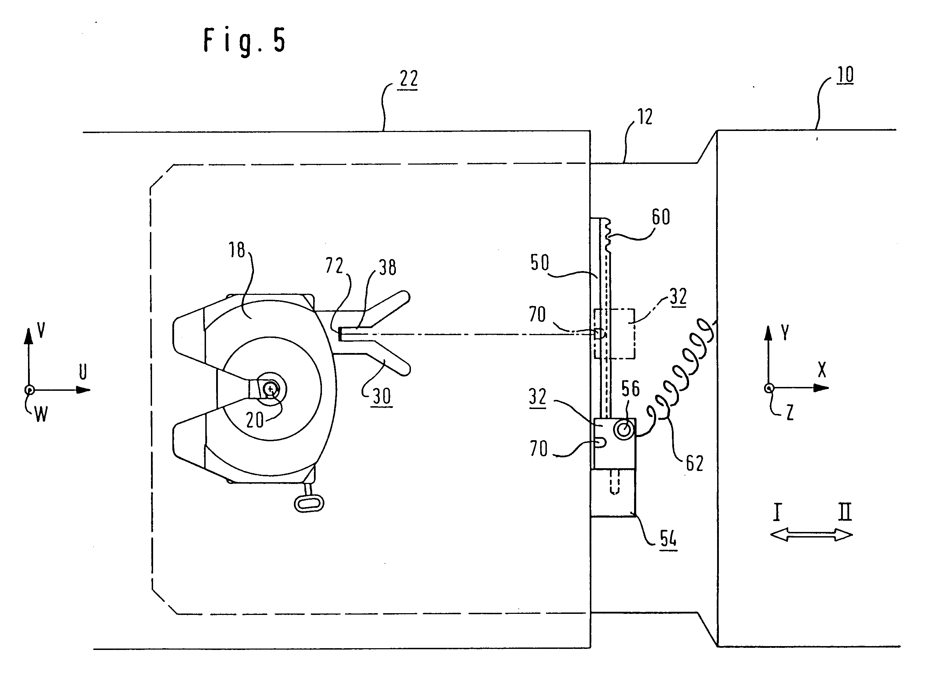

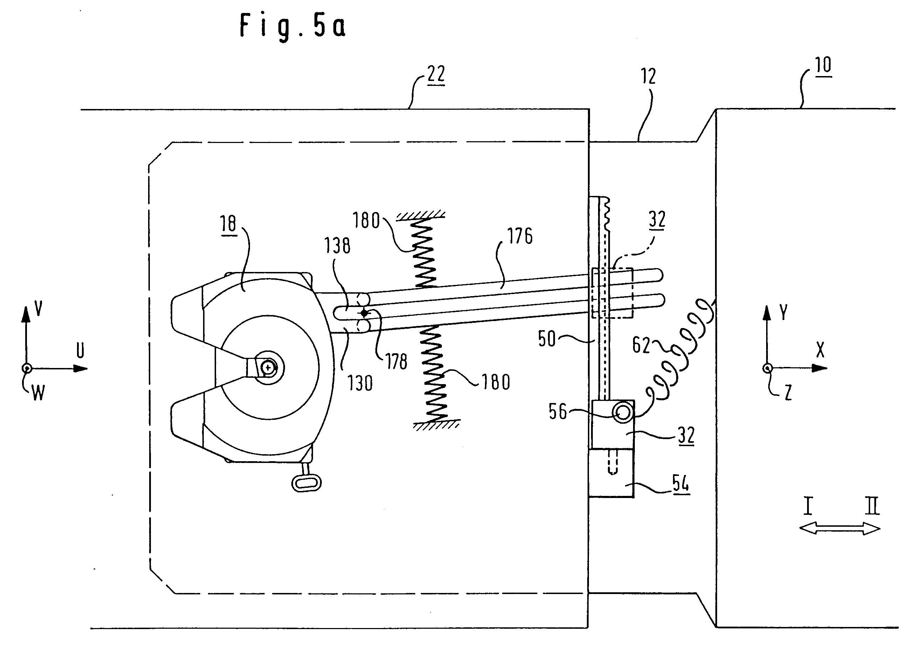

Die zugseitige Kupplungshälfte ist durch eine Vielfachleitung 62 mit einer Versorgungseinheit 64 innerhalb des Zugfahrzeugs 10 verbunden. Innerhalb der flexiblen Vielfachleitung 62 befinden sich elektrische Litzen und Fluiden führende Schläuche, welche alle notwendigen elektrischen und fluidischen Zuleitungen zum Nachlauffahrzeug 22 übertragen können, wenn die beiden Kupplungshälften 32 und 54 miteinander gekuppelt sind. Wenn hier von Fluiden führenden Schläuchen gesprochen wird, so sollen damit sowohl Gas führende als auch Flüssigkeit führende Schläuche erfaßt sein. In der Sattelschleppertechnik arbeitet man in der Regel mit Druckgas führenden Schläuchen, da eine Druckgasversorgung am Zugfahrzeug für die Bremssysteme des Zugfahrzeugs und des Nachlauffahrzeugs ohnehin zur Verfügung steht. Innerhalb des Nachlauffahrzeugs können dann diese Litzen- und Fluidenleitungen, wie in Figur 3 bei 65 angedeutet, einzeln verlaufen. Eine der Litzen innerhalb der Vielfachleitung 62 dient dem elektrischen Antrieb des Getriebemotors 56. Der Getriebemotor 56 wird entweder durch einen Endschalter zum Laufen gebracht, wenn die Fangschiene 50 in das U-Teil 46 eingetreten ist oder durch einen Steuerbefehl seitens des in der Führerkabine des Zugfahrzeugs sitzenden Bedienungsmannes. Dann bewegt sich die zugseitige Kupplungshälfte 32 in Richtung auf die nachlaufseitige Kupplungshälfte 54 bis die beiden Kupplungshälften miteinander gekuppelt sind. Der Einkupplungsvorgang wird dabei noch unterstützt durch einen Kupplungsdorn 66, der in ein Kupplungsloch 68 der nachlaufseitigen Kupplungshälfte 54 einfährt und die beiden Kupplungshälften 32 und 54 so gegeneinander zentriert, daß die Kupplungsstecker 34 gemäß Figur 2 zwangsläufig in entsprechende Steckeraufnahmen der nachlaufseitigen Kupplungshälfte 54 eintreten. Sobald der Kupplungsvorgang zwischen den Kupplungshälften 32 und 54 beendet ist, können von dem in der Fahrerkabine sitzenden Bedienungsmann elektrische Verriegelungsmittel ausgelöst werden, welche eine Trennung der Kupplungshälften 32 und 54 voneinander verhindern. Erst dann ist der Sattelzug 10,22 fahrbereit. Dieser Zustand ist in Figur 5 dargestellt. Der Getriebemotor 56 kann durch einen Endschalter zum Stillstand kommen, wenn die beiden Kupplungshälften 32 und 54 miteinander verbunden sind.

Soll das Zugfahrzeug 10 ausgehend von der in Figur 5 dargestellten fahrbereiten Stellung von dem Nachlauffahrzeug 22 wieder abgekuppelt werden, so muß zunächst nach Lösung der Verriegelungsmittel die zugseitige Kupplungshälfte 32 aus der in Figur 5 ausgezogenen gezeichneten Kupplungsstellung in eine strichpunktiert gezeichnete Abgabestellung verfahren werden, in welcher die Kupplungshälfte 32 gegenüber dem Gabelschlitz 38 der Positionierungskonsole 30 ausgerichtet ist. Hierzu muß der Getriebemotor 56 wieder von der Fahrerkabine aus in Betrieb gesetzt werden, so daß die zugseitige Kupplungshälfte 32 in Figur 5 längs des Zahnriemenabschnitts 60 nach oben fährt. Die strichpunktierte Abgabeposition der Kupplungshälfte 32 kann dabei durch eine Lasersucheinrichtung 70 ermittelt werden, die aus einem Sender und Empfänger im Bereich der Kupplungshälfte 32 sowie einem Reflektor 72 im Bereich des Gabelschlitzes 38 bestehen kann. Diese Lasersucheinrichtung kann auch so ausgebildet sein, daß sie ständig eine Einstellung der Kupplungshälfte 32 in den Bereich der Längsmittelachse des Zugfahrzeugs herbeizuführen sucht. Die Lasersucheinrichtung sei hier als Beispiel für andere mögliche Sucheinrichtungen, z.B. induktive Sucheinrichtungen, verstanden. Die Erreichung der Abgabestellung gemäß strichpunktierter Eintragung in Figur 5 wird dem Bedienungsmann in der Führerkabine angezeigt. Sobald er diese Anzeige erhält kann er die Sattelkupplung durch Fernbetätigung öffnen, so daß der Königszapfen 20 nunmehr aus dem Kupplungsschloß 28 ausfahren kann. Hierzu wird nun das Zugfahrzeug 10 in Pfeilrichtung II vorgefahren. Dabei gelangt - wie aus Figur 2 ersichtlich - die Positionierungskonsole 30 in den Bereich des Gabeleingriffsbolzens 36 der zugseitigen Kupplungshälfte 32. Das U-Teil 46 wird zunächst noch an der Fangschiene 50 durch die Schnappnocken 48 festgehalten und das Keilprofil 44 läuft über den Eingriffsbolzenkopf 42 hinweg, so daß der Gabeleingriffsbolzen 36 gegen den inneren Endbereich des Gabelschlitzes 38 (bei 72) zum Anschlag kommt. Wenn nun das Zugfahrzeug 10 weiter in Pfeilrichtung II vorfährt, so nimmt die Positionierungskonsole 30 die zugseitige Kupplungshälfte 32 mit und die Schnappnocken 48 schnappen aus dem Eingriff mit der Fangschiene 50 aus. Damit kommt die zugseitige Kupplungshälfte 32 letztlich wieder in die Einfangsbereitschaftsstellung gemäß Figur 1. Dann ist auch der Königszapfen 20 - wie in Figur 1 dargestellt - wieder vollständig von der Sattelplatte 18 getrennt.

Selbstverständlich muß vor dem Trennvorgang das Nachlauffahrzeug 22 durch die Stützbeine 23 abgestützt werden und zwar so, daß die Auflageplatte 26 nach wie vor in Berührung oder engster Nachbarschaft zur Sattelplatte 18 bleibt. Hierzu können die Stützbeine 24 von dem in der Führerkabine sitzenden Bedienungsmann entsprechend weit nach unten ausgefahren werden bis zur Anlage an der Fahrfläche.

Aus Vorstehendem ergibt sich, daß zum Zusammenkuppeln der beiden Teilfahrzeuge 10 und 22 und zur Trennung derselben nur ein Mann in der Führerkabine erforderlich ist und dieser zu keinem Zeitpunkt für Betätigungs- oder Überwachungsaufgaben aussteigen muß.

Wenn der Bedienungsmann nicht ohnehin durch ein Rückfenster der Führerkabine die Möglichkeit hat, das ordnungsgemäße Eintreten des Königszapfens 20 in das Kupplungsschloß 28 zu beobachten, so besteht die Möglichkeit, durch eine Fernsehkamera gleichzeitig den Königszapfen 20 und das Kupplungssschloß 28 oder den Eingang des Sattelplattenschlitzes 74 zu beobachten, so daß er die zum Verbinden der Teilfahrzeuge notwendigen Rangierbewegungen jedenfalls von der Führerkabine aus vornehmen und überwachen kann.

In Figur 5a ist eine abgewandelte Ausführungsform dargestellt, bei welcher an den Gabelschlitz 138 der Positionierungskonsole 130 ein Führungslineal 176 anschließt, welches um eine Achse 178 in einer zur Hochachse W senkrechten Ebene schwenkbar gelagert ist. Mit diesem Führungslineal 176 kann der Gabeleingriffsbolzen 36 gemäß Figur 2 ständig im Eingriff bleiben, auch wenn die zugseitige Kupplungshälfte 32 in der Kupplungsstellung ist (in Figur 5a mit ausgezogenen Linien eingezeichnet) und in der Abgabestellung ist (in Figur 5a strichpunktiert angedeutet). Das Führungslineal 176 kann die zugseitige Kupplungshälfte tragen, kann aber auch so ausgebildet sein, daß es diese, ohne sie zu tragen, nur führt. Das Führungslineal 176 kann durch Vorspannfedern 180 in eine Grundstellung - wie in Figur 5a gezeichnet - vorgespannt sein. Diese Vorspannung kann dazu benutzt werden, um die zugseitige Kupplungshälfte 32 zur Vorbereitung eines Trennvorgangs zwischen den beiden Fahrzeugteilen 22 und 10 in die richtige Abgabestellung zu bringen, in welcher die Kupplungshälfte 32 zwangsläufig von dem Gabelschlitz 138 erfaßt wird, sobald das Zugfahrzeug 10 in Pfeilrichtung II vorfährt. Man kann den Getriebemotor 56 dann etwa so steuern, daß er nur die Trennung der Kupplungshälften voneinander bewirkt und dann abgeschaltet wird, worauf die Vorspannfedern 180 die richtige Positionierung der zugseitigen Kupplungshälfte 32 in der Abgabestellung übernehmen.

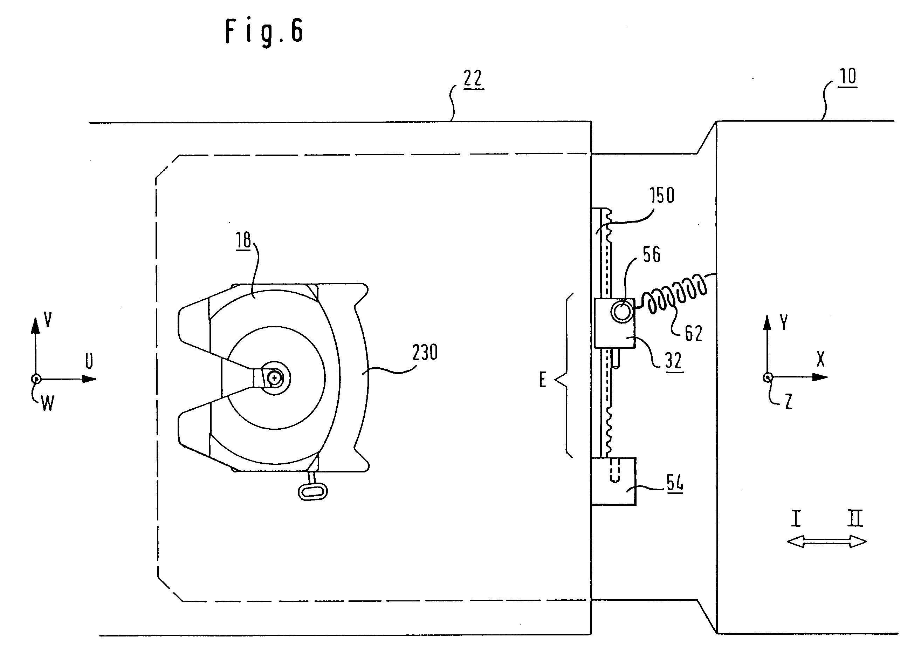

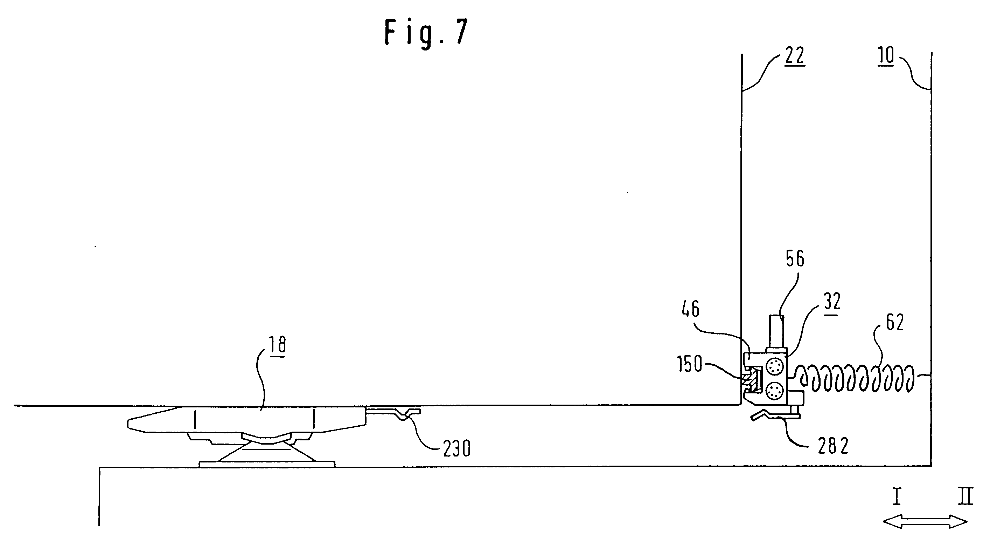

In Figur 6 ist eine Abwandlung zur Ausführungsform nach den Figuren 1 bis 5 dargestellt. Bei dieser Ausführungsform ist die Positionierungskonsole 230 in Querrichtung V wesentlich breiter ausgebildet als in Figur 1. Sie erstreckt sich über die gesamte Breite der Sattelplatte 18. Dies bedeutet, daß beim Trennen der beiden Teilfahrzeuge 22 und 10 keine Probleme bezüglich der richtigen Einstellung der Kupplungshälfte 32 in die Abgabestellung auftreten können. Die Kupplungshälfte 32 kann in einem weiten Einstellungsbereich E auf der Fangschiene 150 eingestellt sein und wird auf jeden Fall durch die Positionierungskonsole 230 getroffen; wenn das Zugfahrzeug 10 sich in Pfeilrichtung II von dem Nachlauffahrzeug 22 entfernt. In Figur 7 ist das Profil der Positionierungskonsole 230 dargestellt, welches mit einer Gabelklammer 282 der zugseitigen Kupplungshälfte 32 zusammenwirkt. Wenn ausgehend von der Stellung der Figuren 6 und 7 das Zugfahrzeug in Pfeilrichtung II vorwärts fährt, gelangt die Konsole 230 in die Gabelklammer 282 und schnappt in diese ein. Erst bei weiterem Vorfahren des Zugfahrzeugs in Pfeilrichtung II wird das U-Teil 46 von der Fangschiene 150 abgezogen. Wenn andererseits bei einem Kupplungsvorgang das Zugfahrzeug 10 in Pfeilrichtung I zurückfährt, so löst sich das Profil der Positionierungskonsole 230 erst dann aus der Gabelklammer 282, nachdem das U-Teil 46 auf der Fangschiene 150 aufgerastet ist.

Im übrigen entspricht die Ausführungsform nach den Figuren 6 und 7 derjenigen nach den Figuren 1 bis 5. Die Ausführungsform nach Figuren 6 und 7 verdient gegenüber derjenigen nach den Figuren 1 bis 5 den Vorzug, weil das Trennen der beiden Teilfahrzeuge 10 und 22 erleichtert ist, indem die zugseitige Kupplungshälfte 32 von der Positionierungskonsole 230 einfacher und zuverlässiger erfaßt werden kann.

Es ist noch darauf hinzuweisen, daß die zugseitige Kupplungshälfte 32 in der Ausführungsform nach Figur 1 bis 5a und auch in der Ausführungsform nach Figuren 6 und 7 wenigstens geringfügig um eine zu der Hochachse W parallele Achse 84 schwenkbar ist, wenn sie sich auf der Positionierungskonsole 30 bzw. 230 befindet. Dies bedeutet, daß sich die zugseitige Kupplungshälfte 32 unabhängig von der relativen Winkellage der Längsachsen X und U des Zugfahrzeugs bzw. des Nachlauffahrzeugs zwangsläufig an die Fangschiene 50 anlegt.

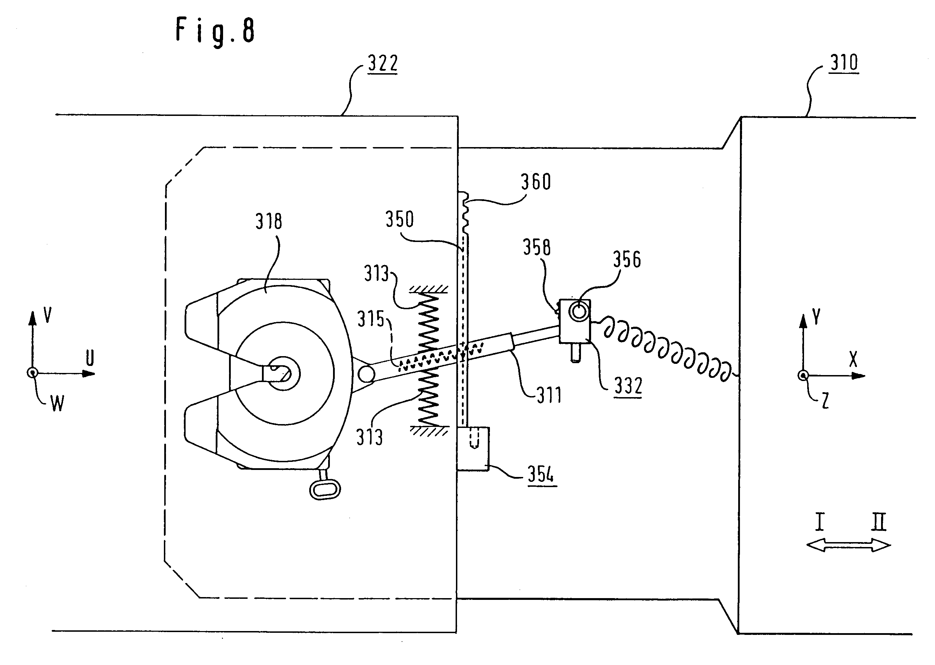

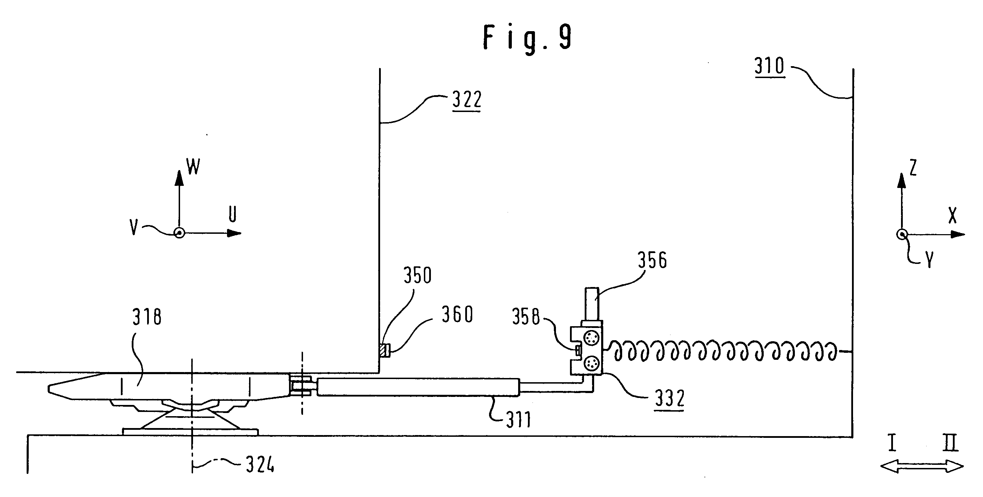

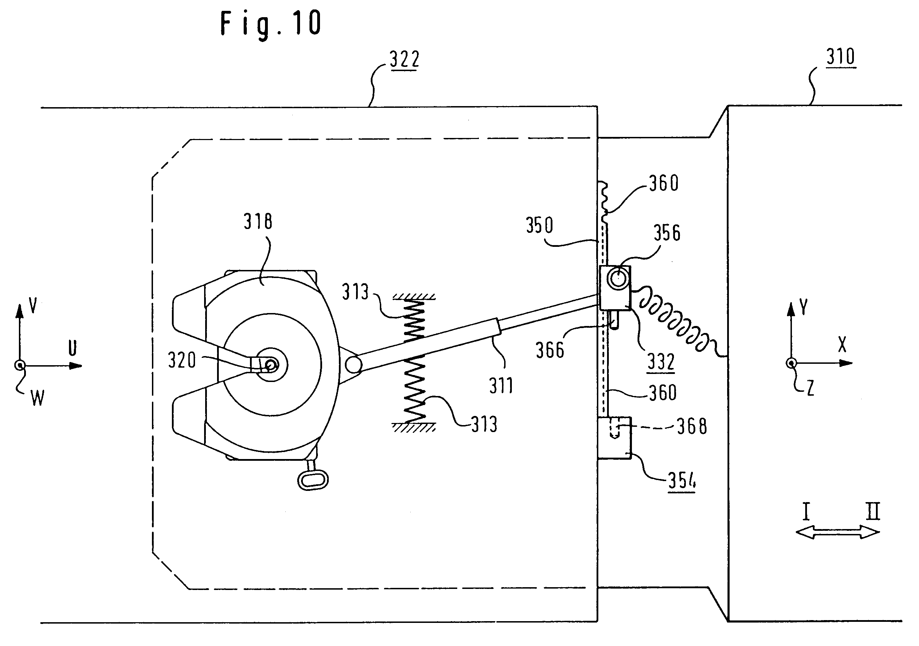

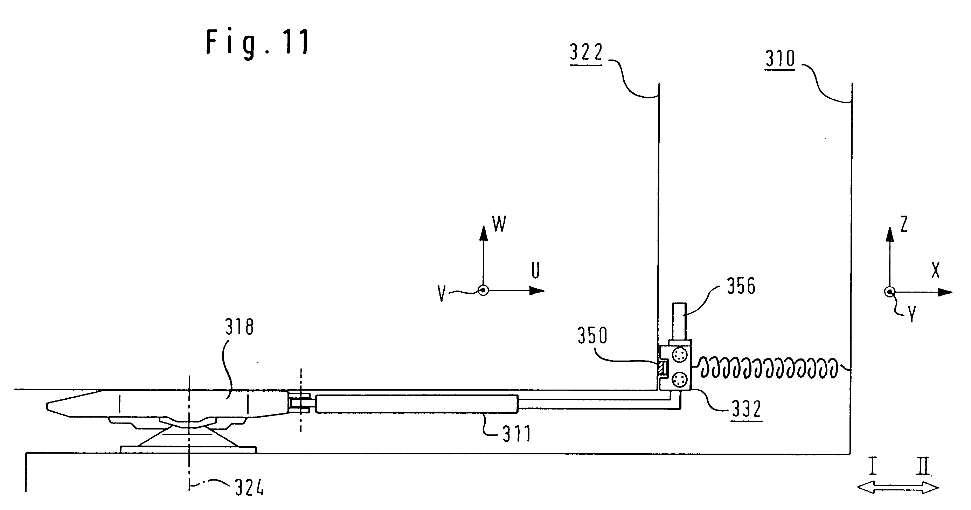

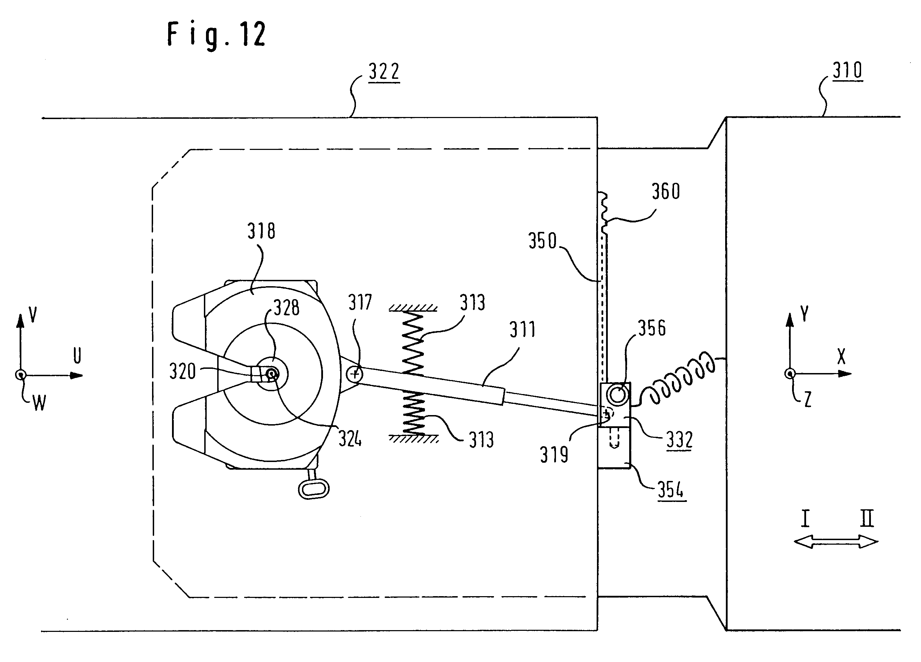

In der Ausführungsform nach den Figuren 8 bis 12 ist an der Sattelplate 318 ein Positionierungsgestänge 311 angebracht, welches ständig die zugseitige Kupplungshälfte 332 trägt. Analoge Teile sind mit gleichen Bezugszeichen versehen wie in den Figuren 1 bis 5, jeweils vermehrt um die Zahl 300. Das Positionierungsgestänge ist durch Vorspannfedern 313 in die Winkelstellung gemäß Figur 8 vorgespannt und durch eine innere Zugfeder 315 auf die Längeneinstellung gemäß Figur 8 eingestellt. Wenn die Fangschiene 350 gegen die zugseitige Kupplungshälfte 332 auftrifft, legt sich diese mit dem Ritzel 358 wieder in den Zahnriemenabschnitt 360, wobei wieder eine Schnappverbindung hergestellt werden kann, wie in Figur 2 durch die Schnappnocken 48 und das Profil der Fangschiene 50 angedeutet. Die Kupplungshälfte 332 kann also aus der Fangstellung, die in Figur 10 angedeutet ist, wieder motorisch längs der Fangschiene 350 und des Zahnriemenabschnitts 360 durch den Getriebemotor 356 und das Ritzel 358 in Richtung auf den Eingriff mit der nachlaufseitigen Kupplungshälfte 354 bewegt werden. Insofern ist kein Unterschied zu der Ausführungsform nach den Figuren 1 bis 5. Aus dem Vergleich der Figuren 8 und 10 erkennt man, daß beim Zusammenfahren der beiden Fahrzeugteile 322 und 310 das Teleskopgestänge 311 gegen die Wirkung der Feder 315 gelängt worden ist. Beim Übergang der zugseitigen Kupplungshälfte 332 von der Fangstellung gemäß Figur 10 in die Kupplungsstellung gemäß Figur 12 wird das Gestänge 311 wieder etwas verkürzt, was ohne weiteres möglich ist. In der Stellung gemäß Figur 12 sind die beiden Teilfahrzeuge 310 und 322 zur gemeinsamen Fahrt miteinander verbunden. Der Königszapfen 320 ist in dem Kupplungsschloß 328 aufgenommen und die beiden Kupplungshälften 332 und 354 befinden sich im Zustand der Einkupplung. Eine Behinderung relativen Verschwenkens der Fahrzeugteile 310 und 322 um die Schwenkachse 324 durch das Gestänge 311 tritt nicht ein, weil dieses Gestänge 311 an der Sattelplatte 318 bei 317 um eine zur Hochachse W parallele Schwenkachse schwenkbar gelagert ist und ferner bei 319 gelenkig mit der zugseitigen Kupplungshälfte 332 verbunden ist und weil schließlich das Gestänge 311 teleskopisch verlängerbar und verkürzbar und durch die Vorspannfedern 313 an dem Zugfahrzeug 310 nachgiebig abgestützt ist.

Bei einer Abkupplung des Zugfahrzeugs 310 von dem Nachlauffahrzeug 322 muß zuerst wieder die zugseitige Kupplungshälfte 332 von der nachlaufseitigen Kupplungshälfte 354 abgekuppelt werden, ggf. nach vorheriger Entriegelung von den Kupplungszustand sichernden Verriegelungsmitteln. Ist die Trennung der Kupplungshälften 332 und 354 einmal herbeigeführt, das heißt, ist der Zentrierdorn 366 einmal aus dem Zentrierloch 368 herausgefahren, so kann der Getriebemotor 356 ganz abgeschaltet oder auf verminderte Leistung eingestellt werden, so daß er die Bewegung des Gestänges 311 durch die Vorspannfedern 313 allenfalls noch unterstützt. Das Gestänge 311 stellt sich dann zwangsläufig auf die Stellung gemäß Figur 10 ein und geht wieder in die Einfangsbereitschaftsstellung gemäß Figur 8 über, sobald das Zugfahrzeug 310 gegenüber dem Nachlauffahrzeug 322 in der Richtung X vorfährt.

Die Erfindung ist grundsätzlich und vorzugsweise anwendbar bei Sattelzügen. Sie ist aber auch bei anderen Schleppzügen anwendbar, die mit herkömmlichen Anhängerkupplungen gekuppelt werden. So ist die Erfindung anwendbar bei LKWs und Omnibussen mit Anhänger herkömmlicher Bauart, zum Beispiel Anhänger, die eine deichselgelenkte Vorderachse und mindestens eine hintere Starrachse besitzen, wobei die Deichsel über eine Kupplungsöse mit einer Bolzenkupplung am rückwärtigen Ende des LKWs bzw. Omnibusses gekuppelt wird. Ein weiteres Anwendungsfeld sind Transportzüge, bestehend aus einem LKW oder einem sonstigen Zugfahrzeug mit üblicher Anhängerkupplung und einem Einachs- oder Mehrachsanhänger, der über eine starre Deichsel an die Anhängerkupplung des Zugfahrzeugs angekuppelt wird.

Grundsätzlich ist die Erfindung aber auch anwendbar bei Schleppzügen, die etwa von einem PKW und einem daran angekuppelten Einachs- oder Mehrachsanhänger gebildet werden. Weiterhin ist die Erfindung anwendbar bei Schleppzügen, bei denen das Nachlauffahrzeug von fahrbaren Geräten, zum Beispiel einem landwirtschaftlichen Gerät oder einem Baugerät, gebildet ist.

Bevorzugt findet die Erfindung dann Anwendung, wenn die Einkupplung der Schleppkupplung automatisiert ist, also zum Beispiel dann, wenn die Schleppkupplung durch Rückwärtsstoßen des Zugfahrzeugs eingekuppelt werden kann.

In Kombination mit dem Erfindungsvorschlag kann es insbesondere auch von wesentlicher Bedeutung sein, das sämtliche beim Zusammenstellen des Schleppzugs für Transportbetrieb und beim Trennen des Schleppzugs notwendigen Vorgänge von einer zentralen Steuerstelle, insbesondere dem Fahrerplatz in einer Fahrerkabine aus bedienbar sind. Zu diesen Vorgängen gehören neben dem Kuppeln und Trennen der eigentlichen Schleppkupplung unter Umständen folgende Vorgänge:
- Ausfahren von Stützfüßen zur Abstützung eines Sattelzuganhängers und Einrücken einer Bremse bei einem Sattelzuganhänger,
- Ausfahren einer Deichselstütze an einem Einachs- oder Mehrachsanhänger und Einrücken der zugehörigen Bremse,
- Ausfahren einer Deichselstütze bei einem PKW-Anhänger und Einrücken einer zugehörigen anhängerseitigen Bremse.

Das Ziel der Erfindung ist es nämlich, zu erreichen, daß der Fahrer alle notwendigen Vorgänge beim Zusammenstellen und Trennen eines Schleppzugs von seinem üblichen Aufenthaltsort oder einem sonstigen zentralen Steuerort aus auslösen kann, ohne diesen Ort verlassen zu müssen und insbesondere ohne sich in gefährdete Bereiche zu begeben.

## Patentansprüche

1. Schleppzug, insbesondere Sattelzug, umfassend ein Zugfahrzeug (10) mit einer Längsachse (X), einer Querachse (Y) und einer Hochachse (Z) (im folgenden genannt: zugseitige Längsachse (X), zugseitige Querachse (Y), zugseitige Hochachse (Z)),
ein Nachlauffahrzeug (22) mit einer Langsachse (U), einer Querachse (V) und einer Hochachse (W) (im folgenden genannt: nachlaufseitige Längsachse (U), nachlaufseitige Querachse (V), nachlaufseitige Hochachse (W)),
eine Schleppkupplung, insbesondere eine Sattelkupplung (18) zur Herstellung einer um eine hochachsenparallele Kupplungsachse (24) gelenkigen Zug- und Schubverbindung zwischen den beiden Teilfahrzeugen (10,22): Zugfahrzeug (10) und Nachlauffahrzeug (22),
eine Versorgungskupplung (32,54) zwischen den beiden Teilfahrzeugen (10,22) mit einer zugfahrzeugseitigen Kupplungshälfte (32) (im folgenden genannt: zugseitige Kupplungshälfte (32)) und einer nachlauffahrzeugseitigen Kupplungshälfte (54) (im folgenden genannt: nachlaufseitige Kupplungshälfte (54)), wobei von diesen Kupplungshälften (32,54) mindestens eine erste (32) mit dem Versorgungsteil (64) des jeweiligen Teilfahrzeugs (10) durch eine flexible Versorgungsleitung (62) verbunden und im Zustand der Einkupplung (Figur 5) mit der jeweils zweiten Kupplungshälfte (54) relativ zum jeweiligen Teilfahrzeug (10) in solcher Weise beweglich ist, daß relative Schwenkbewegungen der Teilfahrzeuge (10,22) um die Kupplungsachse (24) nicht wesentlich behindert sind,
**dadurch gekennzeichnet**,
daß eine (54) der beiden Kupplungshälften (32,54) am zugehörigen einen (22) der beiden Teilfahrzeuge (10,22) betriebsmäßig fest angeordnet ist,
daß die andere Kupplungshälfte (32) über eine flexible Versorgungsleitung (62) mit dem Versorgungsteil (64) des anderen Teilfahrzeugs (10) verbunden ist,
daß auf dem anderen Teilfahrzeug (10) Positionierungsmittel (30) vorgesehen sind, welche bei Trennung der Teilfahrzeuge (10,22) die andere Kupplungshälfte (32) in einer Fangbereitschaftsstellung (Figuren 1 und 2) positionieren, und
daß an dem einen Teilfahrzeug (22) eine Fangvorrichtung (50) für die andere Kupplungshälfte (32) vorgesehen ist,
wobei die Fangvorrichtung (50) bei einem Annäherungsvorgang zwischen den beiden Teilfahrzeugen (10,22) die in Fangbereitschaftsstellung (Figuren 1 und 2) positionierte andere Kupplungshälfte (32) in eine Fangstellung (Figur 3) bezüglich des einen Teilfahrzeugs (22) einfängt,
wobei weiter
entweder diese Fangstellung eine dem Zustand der Einkupplung zwischen den beiden Kupplungshälften entsprechende Kupplungsstellung ist
oder diese Fangstellung (Figur 3) Ausgangspunkt eines am einen Teilfahrzeug (22) angebrachten Transportwegs (60) ist, auf welchem die andere Kupplungshälfte (32) von der Fangstellung (Figur 3) in eine dem Zustand der Einkupplung entsprechende Kupplungsstellung (Figur 5) transportierbar ist,
und wobei im Einkupplungszustand der beiden Kupplungshälften (32,54) die andere Kupplungshälfte (32) zumindest die für die relativen Schwenkbewegungen der beiden Teilfahrzeuge (10,22) notwendige Bewegungsfreiheit gegenüber dem anderen Teilfahrzeug (10) hat.

2. Schleppzug nach Anspruch 1, insbesondere Sattelzug,
**dadurch gekennzeichnet,**
daß die nachlaufseitige Kupplungshälfte (54) am Nachlauffahrzeug (22) betriebsmäßig fest angeordnet ist,
daß die zugseitige Kupplungshälfte (32) über eine flexible Versorgungsleitung (62) mit dem Versorgungsteil (64) des Zugfahrzeugs (10) verbunden ist,
daß auf dem Zugfahrzeug (10) Positionierungsmittel (30) vorgesehen sind, welche bei Trennung von Zugfahrzeug (10) und Nachlauffahrzeug (22) die zugseitige Kupplungshälfte in einer Fangbereitschaftsstellung (Figur 1) positionieren, und
daß an dem Nachlauffahrzeug (22) eine Fangvorrichtung (50) für die zugseitige Kupplungshälfte (32) vorgesehen ist,
wobei die Fangvorrichtung (50) bei einem Annäherungsvorgang zwischen den beiden Teilfahrzeugen (10,22) die in Fangbereitschaftsstellung (Figuren 1 und 2) positionierte zugseitige Kupplungshälfte (32) in eine Fangstellung (Figur 3) bezüglich des Nachlauffahrzeugs (22) einfängt,
wobei weiter
entweder diese Fangstellung dem Zustand der Einkupplung zwischen den beiden Kupplungshälften entspricht
oder diese Fangstellung (Figur 3) Ausgangspunkt eines am Nachlauffahrzeug (22) angebrachten Transportwegs (60) ist, auf welchem die zugseitige Kupplungshälfte (32) von der Fangstellung (Figur 3) in eine dem Zustand der Einkupplung zwischen den beiden Kupplungshälften (32,54) entsprechende Kupplungsstellung (Figur 5) transportierbar ist,
und wobei im Kupplungszustand (Figur 5) der beiden Kupplungshälften (32,54) die zugseitige Kupplungshälfte (32) zumindest die für relative Schwenkbewegungen der beiden Teilfahrzeuge (10,22) notwendige Bewegungsfreiheit gegenüber dem Zugfahrzeug (10) hat.

3. Schleppzug nach Anspruch 1 oder 2, insbesondere Sattelzug,
**dadurch gekennzeichnet,**
daß die Fangvorrichtung (50) zur zwangsläufigen Freigabe der anderen Kupplungshälfte (32) und die Positionierungsmittel (30) zur zwangsläufigen Neupositionierung der anderen Kupplungshälfte (32) in der Einfangsbereitschaftsstellung (Figur 1) im Verlauf eines Trennvorgangs zwischen den beiden Teilfahrzeugen (10,22) ausgebildet sind.

4. Schleppzug nach Anspruch 3, insbesondere Sattelzug,
**dadurch gekennzeichnet,**
daß im Falle des Bestehens eines Transportwegs (60) zwischen der Kupplungsstellung (Figur 5) und der Fangstellung (Figur 3) der anderen Kupplungshälfte (32), diese zur Vorbereitung der Trennung von der Einfangvorrichtung (50) längs des Transportwegs (60) in eine möglicherweise der Fangstellung entsprechende Abgabestellung (Figur 5, strichpunktiert) zurückführbar ist, von der aus die Neupositionierung in der Einfangsbereitschaftsstellung möglich ist.

5. Schleppzug nach einem der Ansprüche 1 bis 4, insbesondere Sattelzug,
**dadurch gekennzeichnet,**
daß die jeweils andere Kupplungshälfte (32) bei Annäherung und Trennung der beiden Teilfahrzeuge (10,22) mit der Fangvorrichtung (50) gegenüber dem anderen Teilfahrzeug (10) in dessen Längsrichtung (X) jeweils auf einem Teilweg mitbewegbar ist.

6. Schleppzug nach Anspruch 5, insbesondere Sattelzug,
**dadurch gekennzeichnet,**
daß die andere Kupplungshälfte (32) bei ihrer Mitbewegung mit der Fangvorrichtung (50) im Falle einer Annäherung der beiden Teilfahrzeuge (10,22) aus der durch die Positionierungsmittel (30) bestimmten Einfangsbereitschaftsstellung (Figur 1) lösbar und bei ihrer Mitbewegung mit der Fangvorrichtung (50) im Falle einer Trennung der beiden Teilfahrzeuge (10,22) in die Einfangsbereitschaftsstellung (Figur 1) zurückführbar ist.

7. Schleppzug nach einem der Ansprüche 1 bis 6, insbesondere Sattelzug,
**dadurch gekennzeichnet,**
daß zwischen der Fangvorrichtung (50) und der anderen Kupplungshälfte (32) eine erste Schnappverbindung (48,50) besteht, welche bei Annäherung der beiden Teilfahrzeuge (10,22) einrastet und bei Trennung der beiden Teilfahrzeuge (10,22) ausrastet.

8. Schleppzug nach einem der Ansprüche 1 bis 7, insbesondere Sattelzug
**dadurch gekennzeichnet,**
daß zwischen den Positionierungsmitteln (30) und der anderen Kupplungshälfte (32) eine zweite Schnappverbindung (36,44) besteht, welche bei Annäherung der beiden Teilfahrzeuge (10,22) ausrastet und bei Trennung der beiden Teilfahrzeuge einrastet.

9. Schleppzug nach Anspruch 8, insbesondere Sattelzug,
**dadurch gekennzeichnet,**
daß die erste Schnappverbindung (48,50) und die zweite Schnappverbindung (36,44) derart aufeinander abgestellt sind, daß bei einer Annäherung der beiden Teilfahrzeuge (10,22) die erste Schnappverbindung (48,50) einrastet, bevor die zweite Schnappverbindung (36,44) ausrastet und daß bei einer Trennung der beiden Teilfahrzeuge (10,22) die zweite Schnappverbindung (36,44) einrastet, bevor die erste Schnappverbindung (48,50) ausrastet.

10. Schleppzug nach einem der Ansprüche 7 bis 9, insbesondere Sattelzug,
**dadurch gekennzeichnet,**
daß die erste Schnappverbindung (48,50) zwischen einer Fangschiene (50) der Fangvorrichtung (50) und einem die Fangschiene umgreifenden U-Teil (46) der anderen Kupplungshälfte (32) vorgesehen ist.

11. Schleppzug nach einem der Ansprüche 1 bis 10, insbesondere Sattelzug,
**dadurch gekennzeichnet,**
daß die Positionierungsmittel (30) eine Positionierungsgabel an dem anderen Teilfahrzeug (10) und einen Gabeleingriffsbolzen (36) an der anderen Kupplungshälfte (32) aufweisen.

12. Schleppzug nach Anspruch 11, insbesondere Sattelzug,
**dadurch gekennzeichnet,**
daß zwischen der Positionierungsgabel (38) und dem Gabeleingriffsbolzen (36) eine zweite Schnappverbindung (36,44) vorgesehen ist, welche durch ein orthogonal zur Gabelebene (38) ausladendes Keilprofil (44) der Positionierungsgabel (38) und einen elastisch ausziehbaren Keileingriffskopf (42) des Gabeleingriffsbolzens (36) gebildet sind.

13. Schleppzug nach Anspruch 11 oder 12, insbesondere Sattelzug,
**dadurch gekennzeichnet,**
daß der Gabeleingriffsbolzen (36) bei Nichtgebrauch in eine raumsparende Ruhestellung zurückziehbar ist.

14. Schleppzug nach einem der Ansprüche 7 bis 12, insbesondere Sattelzug,
**dadurch gekennzeichnet,**
daß mindestens eine der Schnappverbindungen (48,50;36,44) mit elastisch nachgiebigen Schnappnocken (48) ausgeführt ist.

15. Schleppzug nach einem der Ansprüche 7 bis 12, insbesondere Sattelzug,
**dadurch gekennzeichnet,**
daß mindestens eine der Schnappverbindungen (48,50;36,44) elektrisch gesteuert ist.

16. Schleppzug nach einem der Ansprüche 1 bis 15, insbesondere Sattelzug,
**dadurch gekennzeichnet,**
daß die Fangvorrichtung (50) oder/und die andere Kupplungshälfte (32) mit Einweiseschrägflächen ausgeführt sind.

17. Schleppzug nach einem der Ansprüche 1 bis 16, insbesondere Sattelzug,
**dadurch gekennzeichnet,**
daß die Positionierungsmittel (30) oder/und die andere Kupplungshälfte (32) Einweiseschrägflächen (40) aufweisen.

18. Schleppzug nach einem der Ansprüche 1 bis 5,7,10,14,15,16, insbesondere Sattelzug,
**dadurch gekennzeichnet,**
daß die Positionierungsmittel ein Gestänge (311) in Form einer Teleskopstange (311), einer Schere, eines Gelenkvierecks, eines abrollbaren Federbands oder dergl. umfassen, welches die andere Kupplungshälfte (332) trägt und in einer zu der zugseitigen Längsachse (X) und der zugseitigen Querachse (Y) parallelen Ebene beweglich ist.

19. Schleppzug nach Anspruch 18, insbesondere Sattelzug,
**dadurch gekennzeichnet,**
daß das Gestänge (311) durch mindestens eine Gruppe von elastischen Vorspannmitteln (313) in Richtung auf Annäherung der anderen Kupplungshälfte (332) an die Einfangsbereitschaftsstellung (Figur 8) vorgespannt ist.

20. Schleppzug nach einem der Ansprüche 5 bis 17, insbesondere Sattelzug,
**dadurch gekennzeichnet,**
daß die andere Kupplungshälfte (32) auf dem anderen Teilfahrzeug (10) durch ein Führungslineal (176) ohne Tragfunktion geführt ist, welches in einer zur Hochachse (Z) des anderen Teilfahrzeugs (10) orthogonalen Ebene schwenkbar ist.

21. Schleppzug nach einem der Ansprüche 1 bis 20, insbesondere Sattelzug,
**dadurch gekennzeichnet,**
daß die andere Kupplungshälfte (32) in der Einfangsbereitschaftsstellung (Figuren 1 und 2) um eine zu der zugseitigen Hochachse (Z) parallele Einstellachse (24) schwenkbar gelagert ist, möglicherweise unter Vorspannung in eine Ruhewinkelstellung.

22. Schleppzug nach einem der Ansprüche 1 bis 21, insbesondere Sattelzug,
**dadurch gekennzeichnet**,
daß die andere Kupplungshälfte (32) auf dem Transportweg (60) motorisch, möglicherweise unter Ausnutzung der Annäherungsbewegung der beiden Teilfahrzeuge (10,22) als Energiequelle, bewegbar ist.

23. Schleppzug nach Anspruch 22, insbesondere Sattelzug,
**dadurch gekennzeichnet,**
daß ein elektrischer oder fluidischer Antrieb (56) für die Befahrung des Transportwegs (60) an demjenigen der Teile: "andere Kupplungshälfte" (32) und "eines Teilfahrzeugs" (22) angeordnet ist, welches mit dem Antrieb des Schleppzugs, insbesondere des Sattelzugs, auch bei Trennung der beiden Teilfahrzeuge (10,22) verbunden bleibt.

24. Schleppzug nach Anspruch 22 oder 23, insbesondere Sattelzug,
**dadurch gekennzeichnet,**
daß die andere Kupplungshälfte (32) mit einem Antriebsmotor (56) und einem von diesem angetriebenen Ritzel (58) ausgerüstet ist, welches bei Eintritt der anderen Kupplungshälfte (32) in die Fangstellung (Figuren 3 und 4) mit einer den Transportweg (60) definierenden Zahnstange (60) in Eingriff tritt.

25. Schleppzug nach Anspruch 24, insbesondere Sattelzug,
**dadurch gekennzeichnet,**
daß die Zahnstange (60) von einem Zahnriemenabschnitt (60) gebildet ist.

26. Schleppzug nach einem der Ansprüche 1 bis 25, insbesondere Sattelzug,
**dadurch gekennzeichnet,**
daß der Transportweg (60) in Richtung der Querachse (V) des einen Teilfahrzeugs (22) verläuft.

27. Schleppzug nach Anspruch 26, insbesondere Sattelzug,
**dadurch gekennzeichnet,**
daß die Versorgungskupplung (32,54) als eine Steckkupplung ausgebildet ist mit einer zu dem Transportweg (60) parallelen Steckrichtung.

28. Schleppzug nach einem der Ansprüche 22 bis 27, insbesondere Sattelzug,
**dadurch gekennzeichnet,**
daß der motorische Antrieb längs der Transportstrecke durch ein Lageerinnerungssystem oder ein Lageerkennungssystem (70,72) gesteuert ist, derart, daß die andere Kupplungshälfte (32) im Verlauf eines Trennvorgangs der beiden Teilfahrzeuge (10,22) an einer für den Übergang der anderen Kupplungshälfte (32) in die Einfangbereitschaftsstellung (Figur 1) geeigneten Wegstelle (Figur 5; strichpunktierte Darstellung) zum Stillstand kommt.

29. Schleppzug nach einem der Ansprüche 1 bis 27, insbesondere Sattelzug,
**dadurch gekennzeichnet,**
daß die Fangvorrichtung (50) oder/und die andere Kupplungshälfte einer Niveaukorrekturbewegung in Richtung der Hochachse (Z,W) des jeweils zugehörigen Teilfahrzeugs (10,22) fähig sind, wobei diese Niveaukorrekturbewegung durch eine Niveaudifferenzerkennungsvorrichtung steuerbar ist.

30. Schleppzug nach einem der Ansprüche 1 bis 29, insbesondere Sattelzug,
**dadurch gekennzeichnet,**
daß eine Niveauanpassung in Richtung der jeweiligen Hochachsen zwischen der Fangvorrichtung (50) und der anderen Kupplungshälfte (32) durch Eingriff zwischen einer Sattelplatte (18) des Zugfahrzeugs (10) und einer Auflageplatte (26) des Nachlauffahrzeugs (22) sichergestellt wird.

31. Schleppzug nach einem der Ansprüche 1 bis 30, insbesondere Sattelzug,
**dadurch gekennzeichnet,**
daß zur Herbeiführung der kupplungsgerechten Ausrichtung von zugfahrzeugseitigen und nachlauffahrzeugseitigen Kupplungsteilen (18,20) der Schleppkupplung, insbesondere der Sattelkupplung (18,20) beim Kupplungsvorgang und zur Bedienung der Schleppkupplungs-, insbesondere der Sattelkupplungsfunktionen ein Fernerkennungssystem oder/und Fernbetätigungssystem im Führerstand vorgesehen ist.

32. Schleppzug nach einem der Ansprüche 1 bis 31, insbesondere Sattelzug,
**dadurch gekennzeichnet,**
daß das Zugfahrzeug (10) mit einer Höheneinstellvorrichtung zur Höheneinstellung der ihm zugehörigen Teile (18) der Schleppkupplung, insbesondere der Sattelkupplung (18,20) ausgerüstet ist oder/und daß das Nachlauffahrzeug (22) mit höhenveränderlichen Stützbeinen (23) ausgerüstet ist.

33. Schleppzug nach Anspruch 32, insbesondere Sattelzug,
**dadurch gekennzeichnet,**
daß die Höheneinstellung der zugfahrzeugseitigen Kupplungsteile (18) und/oder der nachlauffahrzeugseitigen Kupplungsteile (20) der Schleppkupplung, insbesondere der Sattelkupplung (18,20) vom Fahrerplatz aus beeinflußbar und überwachbar ist.

34. Schleppzug nach einem der Ansprüche 1 bis 33, insbesondere Sattelzug,
**dadurch gekennzeichnet,**
daß die vom Bedienungsmann zu beeinflussenden Vorgänge beim Kuppeln und Trennen der Versorgungskupplung (32,54) vom Fahrerplatz aus beeinflußt werden können.

35. Schleppzug nach einem der Ansprüche 1 bis 34, insbesondere Sattelzug,
**dadurch gekennzeichnet,**
daß die Kupplungshälften (32,54) der Versorgungskupplung derart ausgebildet und angeordnet sind, daß sie auch von Hand in den Zustand der gegenseitigen Einkupplung gebracht werden können.

36. Schleppzug nach einem der Ansprüche 1 bis 34, insbesondere Sattelzug,
**dadurch gekennzeichnet,**
daß neben einer selbsttätigen bzw. fernbedienbaren Versorgungskupplung (32,54) eine herkömmliche von Hand zu öffnende bzw. zu schließende Versorgungskupplung vorgesehen ist.

37. Schleppzug nach einem der Ansprüche 1 bis 36, insbesondere Sattelzug,
**dadurch gekennzeichnet,**
daß die Positionierungsmittel (30) für die Positionierung der anderen Kupplungshälfte (32) in Einfangsbereitschaftsstellung (Figur 2) an einem Kupplungsteil (18) der Schleppkupplung, insbesondere der Sattelkupplung (18,20), insbesondere an einer Sattelplatte (18) des Zugfahrzeugs (10), angebracht sind.

38. Schleppzug nach einem der Ansprüche 1 bis 37, insbesondere Sattelzug,
**dadurch gekennzeichnet,**
daß bei gegenseitiger Höhenausrichtung des Zugfahrzeugs (10) und des Nachlauffahrzeugs (22) im Verlauf einer zur Kupplung führenden Annäherungsbewegung insbesondere durch Zusammenwirken einer Sattelplatte (18) des Zugfahrzeugs (10) und einer Aufliegerplatte des Nachlauffahrzeugs (22) die eine (54) der beiden Kupplungshälften (54,32) am zugehörigen einen (22) der beiden Teilfahrzeuge (10,22) betriebsmäßig höhenfest angeordnet ist, insbesondere an der Vorderwand des Nachlauffahrzeugs (22), und daß der Transportweg (60) horizontal verläuft.

## Claims

1. A tractor train, optionally an articulated train, comprising
a tractor vehicle (10) with a longitudinal axis (X), a transverse axis (Y) and a vertical axis (Z) (hereinafter referred to as: tractor-side longitudinal axis (X), tractor-side transverse axis (Y), tractor-side vertical axis (Z)),
a trailer vehicle (22) with a longitudinal axis (U), a transverse axis (V) and a vertical axis (W) (hereinafter referred to as: trailer-side longitudinal axis (U), trailer-side transverse axis (V), trailer-side vertical axis (W)),
a tractor coupling, optionally an articulated coupling (18) to produce, articulated about a coupling axis (24) parallel with the vertical axis, a push-and-pull connection between the two partial vehicles (10, 22): tractor vehicle (10) and trailer vehicle (22),
a supply coupling (32, 54) between the two partial vehicles (10, 22) with a coupling half (32) on the tractor vehicle side (hereinafter referred to as the tractor-side coupling half (32)) and a coupling half (54) on the trailer vehicle side (hereinafter referred to as the trailer-side coupling half (54), of which coupling halves (32, 54) at least one first coupling half (32) is connected to a supply unit (64) of the respective partial vehicle (10) by a flexible supply line (62) and, when the coupling is engaged (Fig. 5) with the respective second coupling half (54), is adapted for movement in relation to the respective partial vehicle (10) in such a way that relative pivoting movements of the partial vehicles (10, 22) about the coupling axis (24) are not substantially impeded,
characterised in that one (54) of the two coupling halves (32, 54) is operatively rigidly disposed on the associated one (22) of the two partial vehicles (10, 22),
in that the other coupling half (32) is connected by a flexible supply line (62) to the supply unit (64) of the other partial vehicle (10),
in that on the other partial vehicle (10) positioning means (30) are provided which position the other coupling half (32) in a ready-for-capture position (Figs. 1 and 2) when the partial vehicles (10, 22) are separated, and
in that on said one partial vehicle (22) a catch device (50) is provided to trap the other coupling half (32), the catch device (50), during an approach operation between the two partial vehicles (10, 22), trapping the other coupling half (32) which is positioned in the ready-for-capture position (Figs. 1 and 2), moving it into a catch position (Fig. 3) in relation to the one partial vehicle (22),
further
either this catch position being a coupling position corresponding to a coupling-engaged condition between the two coupling halves
or this catch position (Fig. 3) being the starting point of a transport path (60) provided on the one partial vehicle (22) and on which the other coupling half (32) can be moved from the catch position (Fig. 3) into a coupling position corresponding to the coupling-engaged condition (Fig. 5),
and in the coupling-engaged condition of the two coupling halves (32, 54), the other coupling half (32) exhibiting in relation to the other partial vehicle (10) at least the freedom of movement necessary for the relative pivoting movements of the two partial vehicles (10, 22).

2. A tractor train according to Claim 1, optionally an articulated train,
characterised in that the trailer-side coupling half (54) is operatively rigidly disposed on the trailer vehicle (22), and
in that the tractor-side coupling half (32) is connected by a flexible supply line (62) to the supply unit (64) of the tractor vehicle (10) and
in that on the tractor vehicle (10) positioning means (30) are provided which position the tractor-side coupling half in a ready-for-capture position (Fig. 1), when the tractor vehicle (10) and trailer vehicle (22) are separated, and
in that there is on the trailer vehicle (22) a catch device (50) for the tractor-side coupling half (32), the catch device (50) during an approach operation between the two partial vehicles (10, 22) trapping the tractor-side coupling half (32) which is positioned in the ready-for-capture position (Figs. 1 and 2) into a catch position (Fig. 3) in relation to the trailer vehicle (22),
and furthermore
either this catch position corresponding to the coupling-engaged position between the two coupling halves
or this catch position (Fig. 3) being the starting point of a transport path (60) provided on the trailer vehicle (22) and on which the tractor-side coupling half (32) can be moved from the catch position (Fig. 3) into a coupling position (Fig. 5) corresponding to the coupling-engaged condition between the two coupling halves (32, 54),
and in the coupling condition (Fig. 5) of the two coupling halves (32, 54) the tractor-side coupling half (32) exhibiting in relation to the tractor vehicle (10) at least the freedom of movement which is necessary for relative pivoting movement of the two partial vehicles (10, 22).

3. A tractor train according to Claim 1 or 2, optionally an articulated train,
characterised in that the catch device (50) is constructed for positive release of the other coupling half (32) while the positioning means (30) are constructed for positive re-positioning of the other coupling half (32) in the ready-for-capture position (Fig. 1) during the course of a process of separation between the two partial vehicles (10, 22).

4. A tractor train according to Claim 3, optionally an articulated train,
characterised in that if there is a transport path (60) between the coupling position (Fig. 5) and the catch position (Fig. 3) of the other coupling half (32), this latter, in order to prepare for separation from the catch device (50), can be returned along the transport path (60) into a release position (Fig. 5, dash-dotted lines) possibly corresponding to the catch position, from which it is possible to re-position this other coupling half (32) in the ready-for-capture position.

5. A tractor train according to one of Claims 1 to 4, optionally an articulated train,
characterised in that during approach and separation of the two partial vehicles (10, 22), the respective other coupling half (32) is adapted to be moved together with the catch device (50) over a partial distance relative to the other partial vehicle (10) and in the longitudinal direction (X) thereof.

6. A tractor train according to Claim 5, optionally an articulated train,
characterised in that the other coupling half (32) can be separated from the ready-for capture position (Fig. 1) determined by the positioning means (30) while it is moving jointly with the catch device (50) in the event of the two partial vehicles (10, 22) moving towards each other, and can be returned to the ready-for-capture position (Fig. 1) while it is moving jointly with the catch device (50) in the event of a separation of the two partial vehicles (10, 22).

7. A tractor train according to one of Claims 1 to 6, optionally an articulated train,
characterised in that there is a first snap connection (48, 50) between the catch device (50) and the other coupling half (32) which snaps into engagement when the two partial vehicles (10, 22) move towards each other and out of engagement when the two partial vehicles (10, 22) are separated.

8. A tractor train according to one of Claims 1 to 7, optionally an articulated train,
characterised in that there is a second snap connection (36, 44) between the positioning means (30) and the other coupling half (32) which snaps out of engagement when the two partial vehicles (10, 22) are approaching each other and engages when the two partial vehicles are separated.

9. A tractor train according to Claim 8, optionally an articulated train,
characterised in that the first snap connection (48, 50) and the second snap connection (36, 44) are so attuned to each other that when the two partial vehicles (10, 22) approach each other the first snap connection (48, 50) engages before the second snap connection (36, 44) disengages, and in that when the two partial vehicles (10, 22) are separated the second snap connection (36, 44) engages before the first snap connection (48, 50) disengages.

10. A tractor train according to one of Claims 7 to 9, optionally an articulated train,
characterised in that the first snap connection (48, 50) is provided between a catch bar (50) of the catch device (50) and a U-shaped part (46) of the other coupling half (32) which encompasses the catch bar.

11. A tractor train according to one of Claims 1 to 10, optionally an articulated train,
characterised in that the positioning means (30) comprise a positioning fork on the other partial vehicle (10) and a fork-engaging bolt (36) on the other coupling half (32).

12. A tractor train according to Claim 11, optionally an articulated train,
characterised in that between the positioning fork (38) and the fork-engaging bolt (36) there is a second snap connection (36, 44) constituted by, extending at right-angles to the fork plane (38), a wedge-shaped profile (44) of the positioning fork (38) and an elastically withdrawable wedge-shaped engaging head (42) on the fork-engaging bolt (36).

13. A tractor train according to Claim 11 or 12, optionally an articulated train,
characterised in that when it is not in use the fork-engaging bolt (36) can be retracted into a space-saving inoperative position.

14. A tractor train according to one of Claims 7 to 12, optionally an articulated train,
characterised in that at least one of the snap connections (48, 50; 36, 44) is constructed with elastically yielding snap studs (48).

15. A tractor train according to one of Claims 7 to 12, optionally an articulated train,
characterised in that at least one of the snap connections (48, 50; 36, 44) is electrically controlled.

16. A tractor train according to one of Claims 1 to 15, optionally an articulated train,
characterised in that the catch device (50) or/and the other coupling half (32) are constructed with inclined guide surfaces.

17. A tractor train according to one of Claims 1 to 16, optionally an articulated train,
characterised in that the positioning means (30) or/and the other coupling half (32) comprise inclined guide surfaces (40).

18. A tractor train according to one of Claims 1 to 5, 7, 10, 14, 15, 16, optionally an articulated train,
characterised in that the positioning means comprise a linkage (311) in the form of a telescopic rod (311), a scissor unit, a four-bar linkage, a roll-on spring strip or the like, the linkage supporting the other coupling half (332) and being adapted for movement in a plane parallel with the tractor-side longitudinal axis (X) and the tractor-side transverse axis (Y).

19. A tractor train according to Claim 18, optionally an articulated train,
characterised in that the linkage (311) is pre-tensioned by at least one group of flexible pre-tensioning means (313) in the sense of bringing the other coupling half (332) towards the ready-for-capture position (Fig. 8).

20. A tractor train according to one of Claims 5 to 17, optionally an articulated train,
characterised in that the other coupling half (32) is guided on the other partial vehicle (10) by a straight guide member (176) which has no supporting function but which is adapted to pivot in a plane orthogonal with the vertical axis (Z) of the other partial vehicle (10).

21. A tractor train according to one of Claims 1 to 20, optionally an articulated train,
characterised in that the other coupling half (32), when in the ready-for-capture position (Figs. 1 and 2), is mounted to pivot about an adjusting axis (24) parallel with the tractor-side vertical axis (Z), possibly while being pre-tensioned to assume an angular inoperative position.

22. A tractor train according to one of Claims 1 to 21, optionally an articulated train,
characterised in that the other coupling half (32) can be moved on the transport path (60) under motor power, possibly by utilising the approach movement of the two partial vehicles (10, 22) as an energy source.

23. A tractor train according to Claim 22, optionally an articulated train,
characterised in that an electrical or fluid drive (56) is disposed for passing the transport path (60) on that one of the parts: "other coupling half" (32) and "the one partial vehicle" (22), which remains connected to the drive of the tractor train, optionally of the articulated train, even when the two partial vehicles (10, 22) are separated.

24. A tractor train according to Claim 22 or 23, optionally an articulated train,
characterised in that the other coupling half (32) is equipped with a driving motor (56) and, driven by this motor, a pinion (58) which engages a rack (60) defining the transport path (60) when the other coupling half (32) enters the catch position (Figs. 3 and 4).

25. A tractor train according to Claim 24, optionally an articulated train,
characterised in that the rack (60) consists of a toothed belt portion (60).

26. A tractor train according to one of Claims 1 to 25, optionally an articulated train,
characterised in that the transport path (60) extends in the direction of the transverse axis (V) of the one partial vehicle (22).

27. A tractor train according to Claim 26, optionally an articulated train,
characterised in that the supply coupling (32, 54) is constructed as a plug-in coupling, the plug-in direction extending parallel with the transport path (60).

28. A tractor train according to one of Claims 22 to 27, optionally an articulated train,
characterised in that the motor drive is controlled along the transport path by a position-memorising system or a position-recognition system (70, 72) so that during a separation of the two partial vehicles (10, 22), the other coupling half (32) comes to a standstill at a location (Fig. 5: shown in dash-dotted lines) on the path which is suitable for the other coupling half (32) to be moved into the ready-for-capture position (Fig. 1).

29. A tractor train according to one of Claims 1 to 27, optionally an articulated train,
characterised in that the catch device (50) or/and the other coupling half are capable of performing a level-correcting movement in the direction of the vertical axis (Z, W) of the respective assosiated partial vehicle (10, 22), this level-correcting movement being capable of being controlled by a level difference recognition device.

30. A tractor train according to one of Claims 1 to 29, optionally an articulated train,
characterised in that adaptation of levels in the direction of the respective vertical axes and between the catch device (50) and the other coupling half (32) is ensured by engagement between a saddle plate (18) on the tractor vehicle (10) and a supporting plate (26) on the trailer vehicle (22).

31. A tractor train according to one of Claims 1 to 30, optionally an articulated train,
characterised in that a remote recognition system or/and remote actuating system is provided in the driver's cabin to create a coupling-appropriate alignment of the tractor-side and trailer-side coupling parts (18, 20) of the tractor coupling, optionally of the articulated coupling (18, 20), during the coupling prosess and for operating the tractor coupling, optionally the articulated coupling functions.

32. A tractor train according to one of Claims 1 to 31, optionally an articulated train,
characterised in that the tractor vehicle (10) is equipped with a height-adjusting device for adjusting the height of those parts (18) of the tractor coupling, optionally of the articulated coupling (18, 20) which are associated to it or/and in that the trailer vehicle (22) is equipped with vertically adjustable stays (23).

33. A tractor train according to Claim 32, optionally an articulated train,
characterised in that vertical adjustment of the tractor-side coupling parts (18) and/or of the trailer-side coupling parts (20) of the tractor coupling, optionally of the articulated coupling (18, 20) can be influenced and monitored from the driver's seat.

34. A tractor train according to one of Claims 1 to 33, optionally an articulated train,
characterised in that those processes which can be influenced by the operator during coupling and separation of the supply coupling (32, 54) can be influenced from the driver's seat.

35. A tractor train according to one of Claims 1 to 34, optionally an articulated train,
characterised in that the coupling halves (32, 54) of the supply coupling are so constructed and arranged that they can also be moved manually into a condition where they are mutually coupled.

36. A tractor train according to one of Claims 1 to 34, optionally an articulated train,
characterised in that in addition to an automatic or remotely operable supply coupling (32, 54) there is a conventional supply coupling which is adapted to be opened or closed manually.

37. A tractor train according to one of Claims 1 to 36, optionally an articulated train,
characterised in that the positioning means (30) for positioning the other coupling half (32) in the ready-for-capture position (Fig. 2) are provided on a coupling part (18) of the tractor coupling, optionally of the articulated coupling (18, 20), optionally on a saddle plate (18) of the tractor vehicle (10).

38. A tractor train according to one of Claims 1 to 37, optionally an articulated train,
characterised in that upon mutual alignment of the heights of the tractor vehicle (10) and of the trailer vehicle (22) during the course of an approach movement which leads to coupling, optionally by the interaction of a saddle plate (18) of the tractor vehicle (10) and a supporting plate of the trailer vehicle (22), one (54) of the two coupling halves (54, 32) is operatively fixed in its height on the associated one (22) of the two partial vehicles (10, 22), optionally being disposed on the front wall of the trailer vehicle (22) and in that the transport path (60) extends horizontally.

## Revendications

1. Train routier remorqué, en particulier semi-remorque, comportant
un véhicule tracteur (10) comportant un axe longitudinal (X), un axe transversal (Y) et un axe vertical (Z) (dénommés ci-après : axe longitudinal côté traction (X), axe transversal côté traction (Y), axe vertical côté traction (Z)),
un véhicule tracté (22) comportant un axe longitudinal (U), un axe transversal (V) et un axe vertical (W) (dénommés ci-après : axe longitudinal côté tracté (U), axe transversal côté tracté (V), axe vertical côté tracté (W)),
un attelage, en particulier une sellette (18), afin de réaliser une liaison de traction et de poussée, articulée autour d'un axe d'accouplement (24) parallèle à l'axe vertical, entre les deux véhicules élémentaires (10, 22) : véhicule tracteur (10) et véhicule tracté (22),
un accouplement d'alimentation (32, 54) entre les deux véhicules élémentaires (10, 22) avec une moitié d'accouplement (32) côté véhicule tracteur (dénommée ci-après moitié d'accouplement côté traction (32)) et une moitié d'accouplement (54) côté véhicule tracté (dénommée ci-après : moitié d'accouplement côté tracté (54)), au moins une première moitié (32) de ces moitiés d'accouplement (32, 54) étant reliée à l'alimentation (64) du véhicule élémentaire (10) respectif par une ligne d'alimentation (62) flexible et à l'état d'accouplement (figure 5) avec la seconde moitié d'accouplement (54) respective, étant mobile par rapport au véhicule élémentaire (10) respectif, de manière que des pivotements relatifs des véhicules élémentaires (10, 22) autour de l'axe d'accouplement (24), ne soient pas sensiblement gênés,
caractérisé en ce que
l'une (54) des deux moitiés d'accouplement (32, 54) est montée fixement, de manière à assurer le fonctionnement, sur le véhicule élémentaire correspondant (22) des deux véhicules élémentaires (10, 22),
en ce que l'autre moitié d'accouplement (32) est reliée, par une ligne d'alimentation (62) flexible, à l'alimentation (64) de l'autre véhicule élémentaire (10),
en ce que, sur l'autre véhicule partiel (10), sont prévus des moyens de positionnement (30) qui, en cas de séparation des véhicules élémentaires (10, 22), positionnent l'autre moitié d'accouplement (32) dans une position de préparation d'accrochage (figures 1 et 2), et
en ce que sur un véhicule élémentaire (22) est prévu un dispositif d'accrochage (50) pour l'autre moitié d'accouplement (32),
le dispositif d'accrochage (50) accrochant, dans une opération d'approche des deux véhicules élémentaires (10, 22), l'autre moitié d'accouplement (32), positionnée dans la position de préparation d'accrochage (figures 1 et 2), dans une position d'accrochage (figure 3) par rapport à un véhicule élémentaire (22),
dans lequel en outre
soit cette position d'accrochage est une position d'accouplement correspondant à l'état accouplé entre les deux moitiés d'accouplement
soit cette position d'accrochage (figure 3) est le point de départ d'un parcours de transport (60), placé sur un véhicule élémentaire (22), sur lequel l'autre moitié d'accouplement (32) peut être transportée de la position d'accrochage (figure 3) dans une position d'accouplement (figure 5) correspondant à l'état accouplé,
et dans lequel à l'état accouplé des deux moitiés d'accouplement (32, 54), l'autre moitié d'accouplement (32) possède au moins la liberté de mouvement nécessaire aux pivotements relatifs des deux véhicules élémentaires (10, 22) par rapport à l'autre véhicule élémentaire (10).

2. Train routier remorqué selon la revendication 1, en particulier semi-remorque,
caractérisé en ce que
la moitié d'accouplement côté tracté (54) est montée fixement, en ordre de fonctionnement, sur le véhicule tracté (22),
en ce que la moitié d'accouplement côté traction (32) est reliée, par une ligne d'alimentation (62) flexible, à l'alimentation (64) du véhicule tracteur (10),
en ce que sur le véhicule tracteur (10) sont prévus des moyens de positionnement (30) qui, en cas de séparation du véhicule tracteur (10) et du véhicule tracté (22), positionnent la moitié d'accouplement côté traction dans une position de préparation d'accrochage (figure 1) et
en ce que sur le véhicule tracté (22) il est prévu un dispositif d'accrochage (50) pour la moitié d'accouplement (32) côté traction,
dans lequel le dispositif d'accrochage accroche, dans une approche des deux véhicules élémentaires (10, 22), la moitié d'accouplement (32) côté traction, positionnée dans la position de préparation d'accrochage (figures 1 et 2), dans une position d'accrochage (figure 3) par rapport au véhicule tracté (22),
dans lequel en outre
soit cette position d'accrochage correspond à l'état accouplé entre les deux moitiés d'accouplement
soit cette position d'accrochage (figure 3) est le point de départ d'un parcours de transport (60), placé sur le véhicule tracté (22), sur lequel la moitié d'accouplement (32) côté traction peut être transportée de la position d'accrochage (figure 3) dans une position d'accouplement (figure 5) correspondant à l'état accouplé des deux moitiés d'accouplement (32, 54),
et dans lequel, à l'état accouplé (figure 5) des deux moitiés d'accouplement (32, 54), la moitié d'accouplement (32) côté traction possède au moins la liberté de mouvement nécessaire aux pivotements relatifs des deux véhicules élémentaires (10, 22), par rapport au véhicule tracteur (10).

3. Train routier remorqué selon la revendication 1 ou 2, en particulier semi-remorque,
caractérisé en ce que
le dispositif d'accrochage (50) est conçu pour libérer forcément l'autre moitié d'accouplement (32) et les moyens de positionnement (30) sont conçus pour repositionner forcément l'autre moitié d'accouplement (32) dans la position de préparation d'accrochage (figure 1) au cours d'une séparation des deux véhicules élémentaires (10, 22).

4. Train routier remorqué selon la revendication 3, en particulier semi-remorque,
caractérisé en ce que
dans le cas où existe un parcours de transport (60) entre la position accouplée (figure 5) et la position d'accrochage (figure 3) de l'autre moitié d'accouplement (32), celle-ci peut être replacée, pour préparer la séparation d'avec le dispositif d'accrochage (50) le long du parcours de transport (60), dans une position de dégagement (figure 5, en trait mixte) correspondant éventuellement à la position d'accrochage, position à partir de laquelle le repositionnement dans la position de préparation d'accrochage est possible.

5. Train routier remorqué selon l'une des revendications 1 à 4, en particulier semi-remorque,
caractérisé en ce que
l'autre moitié d'accouplement (32), en cas d'approche et de séparation des deux véhicules élémentaires (10, 22), est déplaçable avec le dispositif d'accrochage (50), par rapport à l'autre véhicule élémentaire (10), dans sa direction longitudinale (X), sur un parcours partiel.

6. Train routier remorqué selon la revendication 5, en particulier semi-remorque,
caractérisé en ce que
l'autre moitié d'accouplement (32), dans son déplacement avec le dispositif d'accrochage (50), en cas d'approche des deux véhicules élémentaires (10, 22), peut être déverrouillée de la position de préparation d'accrochage (figure 1) déterminée par les moyens de positionnement (30) et, dans son déplacement avec le dispositif d'accrochage (50), en cas de séparation des deux véhicules élémentaires (10, 22), peut être replacée dans la position de préparation d'accrochage (figure 1).

7. Train routier remorqué selon l'une des revendications 1 à 6, en particulier semi-remorque,
caractérisé
en ce qu'entre le dispositif d'accrochage (50) et l'autre moitié d'accouplement (32), il existe une première liaison à encliquetage (48, 50) qui s'encliquette lors de l'approche des deux véhicules élémentaires (10, 22) et est supprimée, lors de la séparation des deux véhicules élémentaires (10, 22).

8. Train routier remorqué selon l'une des revendications 1 à 7, en particulier semi-remorque,
caractérisé
en ce qu'entre les moyens de positionnement (30) et l'autre moitié d'accouplement (32), il existe une seconde liaison par encliquetage (36, 40), qui est supprimée lorsque les deux véhicules élémentaires (10, 22) se rapprochent et qui s'encliquette, lorsque les deux véhicules élémentaires se séparent.

9. Train routier remorqué selon la revendication 8, en particulier semi-remorque,
caractérisé en ce que
la première liaison par encliquetage (48, 50) et la seconde liaison par encliquetage (36, 44) sont adaptées l'une à l'autre de manière que lorsque les deux véhicules élémentaires (10, 22) se rapprochent, la première liaison par encliquetage (48, 50) s'encliquette, avant que la seconde liaison par encliquetage (36, 44) ne soit supprimée et en ce que lorsque les deux véhicules élémentaires (10, 22) se séparent, la seconde liaison par encliquetage (36, 44) s'encliquette, avant que la première liaison par encliquetage (48, 50) ne soit supprimée;

10. Train routier remorqué selon l'une des revendications 7 à 9, en particulier semi-remorque,
caractérisé en ce que
la première liaison par encliquetage (48, 50) est prévue entre une glissière d'accrochage (50) du dispositif d'accrochage (50) et un élément en U (46), entourant la glissière d'accrochage, de l'autre moitié d'accouplement (32).

11. Train routier remorqué selon l'une des revendications 1 à 10, en particulier semi-remorque,
caractérisé en ce que
les moyens de positionnement (30) comportent une fourche de positionnement sur l'autre véhicule élémentaire (10) et un boulon d'engagement de fourche (36) sur l'autre moitié d'accouplement (32).

12. Train routier remorqué selon la revendication 11, en particulier semi-remorque,
caractérisé en ce que,
entre la fourche de positionnement (38) et le boulon d'engagement de fourche (36), il est prévu une seconde liaison par encliquetage (36, 44), qui est formée par un profilé en coin (44) de la fourche de positionnement (38), en porte-à-faux orthogonalement au plan de la fourche (38) et par une tête d'engagement de coin (42), du boulon d'engagement de fourche (36), extractible élastiquement.

13. Train routier remorqué selon la revendication 11 ou 12, en particulier semi-remorque,
caractérisé en ce que
le boulon d'engagement de fourche (36) peut être retiré, en cas de non-utilisation, dans une position de repos peu encombrante.

14. Train routier remorqué selon l'une des revendications 7 à 12, en particulier semi-remorque,
caractérisé en ce que
au moins l'une des liaisons par encliquetage (48, 50 ; 36, 44) est réalisée avec des cames d'encliquetage (48) élastiquement souples.

15. Train routier remorqué selon l'une des revendications 7 à 12, en particulier semi-remorque,
caractérisé en ce que
au moins l'une des liaisons par encliquetage (48, 50 ; 36, 44) est commandée électriquement.

16. Train routier remorqué selon l'une des revendications 1 à 15, en particulier semi-remorque,
caractérisé en ce que
le dispositif d'accrochage (50) ou/et l'autre moitié d'accouplement (32) sont réalisés avec des surfaces obliques d'introduction.

17. Train routier remorqué selon l'une des revendications 1 à 16, en particulier semi-remorque,
caractérisé en ce que
les moyens de positionnement (30) ou/et l'autre moitié d'accouplement (32) présentent des surfaces obliques d'introduction (40).

18. Train routier remorqué selon l'une des revendications 1 à 5, 7, 10, 14, 15, 16, en particulier semi-remorque,
caractérisé en ce que
les moyens de positionnement comportent une tringlerie (311) sous la forme d'une barre télescopique (311), des ciseaux, un quadrilatère articulé, un ruban à ressort enroulable ou similaire, qui porte l'autre moitié d'accouplement (332) et qui est déplaçable dans un plan parallèle à l'axe longitudinal (X) côté traction et à l'axe transversal (Y) côté traction.

19. Train routier remorqué selon la revendication 18, en particulier semi-remorque,
caractérisé en ce que
la tringlerie (311) est précontrainte par au moins un groupe de moyens de précontrainte (313) élastiques, en direction du rapprochement de l'autre moitié d'accouplement (332) de la position de préparation d'accrochage (figure 8).

20. Train routier remorqué selon l'une des revendications 5 à 17, en particulier semi-remorque,
caractérisé en ce que
l'autre moitié d'accouplement (32) est guidée sur l'autre véhicule élémentaire (10) par une règle de guidage (176) sans fonction portante, qui peut pivoter dans un plan orthogonal à l'axe vertical (Z) de l'autre véhicule élémentaire (10).

21. Train routier remorqué selon l'une des revendications 1 à 20, en particulier semi-remorque,
caractérisé en ce que
l'autre moitié d'accouplement (32) en position de préparation d'accrochage (figures 1 et 2) est montée pivotante autour d'un axe de réglage (24) parallèle à l'axe vertical (Z) côté traction, éventuellement précontrainte vers une position angulaire de repos.

22. Train routier remorqué selon l'une des revendications 1 à 21, en particulier semi-remorque,
caractérisé en ce que
l'autre moitié d'accouplement (32) est déplaçable sur le parcours de transport (60), de manière motorisée, éventuellement par exploitation du déplacement d'approche des deux véhicules élémentaires (10, 22) en tant que source d'énergie.

23. Train routier remorqué selon la revendication 22, en particulier semi-remorque,
caractérisé en ce que
un entraînement (56) électrique ou à fluide pour le déplacement sur le parcours de transport (60), est prévu sur celui des éléments : "autre moitié d'accouplement" (32) et "un véhicule élémentaire" (22), qui reste relié à l'entraînement du train routier remorqué, en particulier de la semi-remorque, y compris lorsque les deux véhicules élémentaires (10, 22) sont séparés.

24. Train routier remorqué selon la revendication 22 ou 23, en particulier semi-remorque,
caractérisé en ce que
l'autre moitié d'accouplement (32) est équipée d'un moteur d'entraînement (56) et d'un pignon (58), entraîné par celui-ci, qui vient en prise avec une crémaillère (60), définissant le parcours de transport (60), lorsque l'autre moitié d'accouplement (32) passe dans la position d'accrochage (figures 3 et 4).

25. Train routier remorqué selon la revendication 24, en particulier semi-remorque,
caractérisé en ce que
la crémaillère (60) est formée par une portion de courroie crantée (60).

26. Train routier remorqué selon l'une des revendications 1 à 25, en particulier semi-remorque,
caractérisé en ce que
le parcours de transport (60) s'étend en direction de l'axe transversal (V) d'un véhicule élémentaire (22).

27. Train routier remorqué selon la revendication 26, en particulier semi-remorque,
caractérisé en ce que
l'accouplement d'alimentation (32, 54) est réalisé sous la forme d'un accouplement à enfichage comportant une direction d'enfichage parallèle au parcours de transport (60).

28. Train routier remorqué selon l'une des revendication 22 à 27, en particulier semi-remorque,
caractérisé en ce que
l'entraînement motorisé est commandé le long du parcours de transport par un système à mémoire de position ou un système de détection de position (70, 72), de manière que l'autre moitié d'accouplement (32) s'immobilise en un point du parcours (figure 5 ; représentation en trait mixte), convenant au passage de l'autre moitié d'accouplement (32) dans la position de préparation d'accrochage (figure 1).

29. Train routier remorqué selon l'une des revendications 1 à 27, en particulier semi-remorque,
caractérisé en ce que
le dispositif d'accrochage (50) ou/et l'autre moitié d'accouplement sont susceptibles d'un déplacement de correction de niveau en direction de l'axe vertical (Z, W) du véhicule élémentaire (10, 22) correspondant, ce déplacement de correction de niveau pouvant être commandé par un dispositif de détection de différence de niveau.

30. Train routier remorqué selon l'une des revendications 1 à 29, en particulier semi-remorque,
caractérisé en ce que
une adaptation du niveau, en direction des axes verticaux respectifs entre le dispositif d'accrochage (50) et l'autre moitié d'accouplement (32), est assurée par engagement entre une plaque d'attelage (18) du véhicule tracteur (10) et une plaque d'appui (26) du véhicule tracté (22).

31. Train routier remorqué selon l'une des revendications 1 à 30, en particulier semi-remorque,
caractérisé en ce que
pour provoquer l'orientation conforme à l'accouplement des parties d'accouplement (18, 20) côté véhicule tracteur et côté véhicule tracté de l'attelage du train routier remorqué, en particulier de la sellette (18, 20), lors de l'opération d'attelage et pour commander les fonctions d'attelage, en particulier les fonctions de la sellette, il est prévu un système de détection à distance ou/et un système de commande à distance dans la cabine de conduite.

32. Train routier remorqué selon l'une des revendications 1 à 31, en particulier semi-remorque,
caractérisé en ce que
le véhicule tracteur (10) est équipé d'un dispositif de réglage de hauteur pour le réglage de la hauteur de ses éléments (18) respectifs de l'attelage, en particulier de la sellette (18, 20), ou/et en ce que le véhicule tracté (22) est équipé de pieds d'appui (23) de hauteur variable.

33. Train routier remorqué selon la revendication 32, en particulier semi-remorque,
caractérisé en ce que
le réglage de la hauteur des éléments d'attelage (18) côté véhicule tracteur et/ou des éléments d'attelage (20) côté véhicule tracté de l'attelage, en particulier de la sellette (18, 20), peut être influencé et contrôlé à partir du poste de conduite.

34. Train routier remorqué selon l'une des revendications 1 à 33, en particulier semi-remorque,
caractérisé en ce que
les opérations, devant être influencées par l'opérateur lors de l'accouplement et de la séparation de l'accouplement d'alimentation (32, 54), peuvent être influencées à partir du poste de conduite.

35. Train routier articulé selon l'une des revendications 1 à 34, en particulier semi-remorque,
caractérisé en ce que
les moitiés d'accouplement (32, 54) de l'accouplement d'alimentation sont conçues et disposées de manière qu'elles puissent être aussi amenées manuellement dans la position d'accouplement réciproque.

36. Train routier remorqué selon l'une des revendications 1 à 34, en particulier semi-remorque,
caractérisé en ce que
en plus d'un accouplement d'alimentation (32, 54) automatique ou commandable à distance, il est prévu un accouplement d'alimentation classique à ouvrir ou fermer à la main.

37. Train routier remorqué selon l'une des revendications 1 à 36, en particulier semi-remorque,
caractérisé en ce que
les moyens de positionnement (30) pour le positionnement de l'autre moitié d'accouplement (32) sont fixés, en position de préparation d'accrochage (figure 2), sur un élément d'attelage (18) de l'attelage, en particulier de la sellette (18, 20), en particulier sur une plaque d'attelage (18) du véhicule tracteur (10).

38. Train routier remorqué selon l'une des revendications 1 à 37, en particulier semi-remorque,
caractérisé en ce que
lorsque le véhicule tracteur (10) et le véhicule tracté (22) sont orientés réciproquement en hauteur, au cours d'un déplacement d'approche, menant à l'accouplement, en particulier par coopération d'une plaque d'attelage (18) du véhicule tracteur (10) et d'une plaque d'appui du véhicule tracté (22), l'une (54) des deux moitiés d'accouplement (54, 32) est placée fixe en hauteur, en ordre de fonctionnement, sur le véhicule élémentaire respectif (22) des deux véhicules élémentaires (10, 22), en particulier sur la paroi avant du véhicule tracté (22), et en ce que le parcours de transport (60) s'étend horizontalement.
